(19) Europäisches Patentamt
European Patent Office
Office européen des brevets

(11) **EP 3 597 293 B1**

(12) **EUROPEAN PATENT SPECIFICATION**

(45) Date of publication and mention
of the grant of the patent:
**26.07.2023 Bulletin 2023/30**

(21) Application number: **18768288.5**

(22) Date of filing: **12.03.2018**

(51) International Patent Classification (IPC):
**B01J 29/76** (2006.01)     **C01B 39/48** (2006.01)
**F01N 3/08** (2006.01)     **F01N 3/10** (2006.01)
**B01D 53/94** (2006.01)

(52) Cooperative Patent Classification (CPC):
**B01J 29/76; B01D 53/9418; C01B 39/48;**
**F01N 3/08; F01N 3/10;** B01D 2251/2062;
B01D 2251/2067; B01D 2255/20761;
B01D 2255/50; B01D 2258/012; B01J 29/763

(86) International application number:
**PCT/JP2018/009552**

(87) International publication number:
**WO 2018/168787 (20.09.2018 Gazette 2018/38)**

(54) **TRANSITION METAL-CARRYING ZEOLITE AND PRODUCTION METHOD THEREFOR, AND NITROGEN OXIDE PURIFICATION CATALYST AND METHOD FOR USING SAME**

ÜBERGANGSMETALLHALTIGER ZEOLITH UND HERSTELLUNGSVERFAHREN DAFÜR SOWIE STICKOXID-REINIGUNGSKATALYSATOR UND VERFAHREN ZUR VERWENDUNG DAVON

ZÉOLITE PORTANT UN MÉTAL DE TRANSITION ET PROCÉDÉ DE FABRICATION ASSOCIÉ, ET CATALYSEUR DE PURIFICATION D'OXYDE D'AZOTE ET SON PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2017 JP 2017047094**
**10.11.2017 JP 2017216911**

(43) Date of publication of application:
**22.01.2020 Bulletin 2020/04**

(73) Proprietor: **Mitsubishi Chemical Corporation**
**Tokyo 100-8251 (JP)**

(72) Inventors:
• **HOTTA, Yuusuke**
**Tokyo 100-8251 (JP)**
• **TANAKA, Manabu**
**Tokyo 100-8251 (JP)**
• **TAKEWAKI, Takahiko**
**Tokyo 100-8251 (JP)**
• **MATSUO, Takeshi**
**Tokyo 100-8251 (JP)**

(74) Representative: **Hoffmann Eitle**
**Patent- und Rechtsanwälte PartmbB**
**Arabellastraße 30**
**81925 München (DE)**

(56) References cited:
**WO-A1-2016/080547     JP-A- 2015 134 698**
**US-A1- 2013 272 937     US-A1- 2014 271 426**

• **RADKA NEDYALKOVA ET AL: "Interzeolite Conversion of FAU Type Zeolite into CHA and its Application in NH3-SCR", TOPICS IN CATALYSIS, vol. 56, no. 9-10, 1 June 2013 (2013-06-01), pages 550-557, XP055352002, NL ISSN: 1022-5528, DOI: 10.1007/s11244-013-0015-4**
• **TAKUSHI SONODA ET AL: "Synthesis of high-silica AEI zeolites with enhanced thermal stability by hydrothermal conversion of FAU zeolites, and their activity in the selective catalytic reduction of NO x with NH 3", JOURNAL OF MATERIALS CHEMISTRY A, vol. 3, no. 2, 1 January 2015 (2015-01-01) , pages 857-865, XP055179309, ISSN: 2050-7488, DOI: 10.1039/C4TA05621C**

- YONGHENG LI ET AL: "Nature of Cu Species in Cu-SAPO-18 Catalyst for NH 3 -SCR: Combination of Experiments and DFT Calculations", JOURNAL OF PHYSICAL CHEMISTRY C, vol. 120, no. 27, 20 June 2016 (2016-06-20), pages 14669-14680, XP055609085, US ISSN: 1932-7447, DOI: 10.1021/acs.jpcc.6b03464
- JONATAN D. ALBARRACIN-CABALLERO ET AL: "Structural and kinetic changes to small-pore Cu-zeolites after hydrothermal aging treatments and selective catalytic reduction of NO x with ammonia", REACTION CHEMISTRY & ENGINEERING, vol. 2, no. 2, 1 January 2017 (2017-01-01) , pages 168-179, XP055609087, DOI: 10.1039/C6RE00198J

- Y. LI et al.: "Nature of Cu Species in Cu-SAPO-18 Catalyst for NH3-SCR: Combination of Experiments and DFT Calculations", J. Phys. Chem. C, vol. 120, 2016, pages 14669-14680, XP055609085,
- J. D. ALBARRACIN-CABALLERO et al.: "Structural and kinetic changes to small-pore Cu-zeolites after hydrothermal aging treatments and selective catalytic reduction of N0x with ammonia", Reaction Chemistry & Engineering, vol. 2, 7 December 2016 (2016-12-07), pages 168-179, XP055609087,

## Description

Technical Field

The present invention relates to a novel transition metal-loaded zeolite and a method for producing the same, and to a nitrogen oxide purifying catalyst and a method of using the same.

Background Art

Zeolite has a molecular sieving effect and other various characteristics such as ion-exchange capacity, catalytic activity and adsorptive capacity, which are provided by pores derived from the framework structure thereof, and is, at present, utilized as adsorbents, ion-exchange materials, industrial catalysts and environmental catalysts.

For example, as for exhaust gas catalysts, those using a zeolite that loads a transition metal such as copper thereon, specifically, a CHA-type aluminosilicate zeolite or a silicoaluminophosphate (SAPO) zeolite have been developed. Such a notation as CHA is a code to specify a structure of framework of zeolite defined by IZA (International Zeolite Association).

An AEI-type zeolite is known to have pores that are the same in size as those in a CHA-type one but have a structure having a higher catalytic activity.

A general method for producing an AEI-type zeolite is based on the production method described in PTL 1. An example of the specific production method is as follows. A Y-type zeolite and a colloidal silica are used as raw materials, an organic structure-directing agent (SDA), for example, DMDMPOH (N,N-dimethyl-3,5-dimethylpiperidinium hydroxide), is added thereto, and the resultant is stirred in the presence of NaOH for hydrothermal synthesis for 8 days to give an AEI-type zeolite.

In addition, examples of use of an AEI-type zeolite as a SCR (selective catalytic reduction) catalyst is described in detail in PTL 2. In the case of using as a SCR catalyst for exhaust gas treatment for automobiles and others, and especially for securing exhaust gas treatment at low temperatures, for example, just after engine ignition, it is known that a catalyst that loads a larger amount of a transition metal which functions as an active site is more favorably used.

Further, it is desirable that loaded transition metals are those adsorbed at aluminosilicate zeolite acid sites while retaining the form of cations

However, as shown in NPL 2, a part of transition metals become oxides, so that the transition metals are difficult to be loaded uniformly in the form of cations.

Citation List

Patent Literature

    PTL 1: U.S. Patent No. 5,958,370
    PTL 2: WO 2013/159825 A1

Non-Patent Literature

    NPL 1: Dalton Transactions, 2013, 42, 12741-12761
    NPL 2: J. Am. Chem. Soc., 2003, 125, 7629-7640
    NPL 3: American Chemical Society Catalysis, 2015, 5, 6209-6218

WO 2016/080547 A1; RADKA NEDYALKOVA ET AL: "Interzeolite Conversion of FAU Type Zeolite into CHA and its Application in NH3-SCR",TOPICS IN CATALYSIS, vol. 56, no. 9-10, 2013; US 2013/272937 A1; TAKUSHI SONODA ET AL: "Synthesis of high-silica AEI zeolites with enhanced thermal stability by hydrothermal conversion of FAU zeolites, and their activity in the selective catalytic reduction of NOx with NH3",JOURNAL OF MATERIALS CHEMISTRY A, vol. 3, no. 2, 2015; YONGHENG LI ET AL: "Nature of Cu Species in Cu-SAPO-18 Catalyst for NH3-SCR: Combination of Experiments and DFT Calculations", JOURNAL OF PHYSICAL CHEMISTRY C, vol. 120, no. 27, 2016; JONATAN D. ALBARRACIN-CABALLERO ET AL: "Structural and kinetic changes to small-pore Cu-zeolites after hydrothermal aging treatments and selective catalytic reduction of NO x with ammonia",REACTION CHEMISTRY & ENGINEERING, vol. 2, no. 2, 2017; and US 2014/271426 A, all disclose copper-loaded zeolites for reduction of NOx in combustion gases.

Summary of Invention

Technical Problem

As described above, catalysts using an AEI-type zeolite have heretofore been proposed, but the catalytic performance thereof is not always sufficient and therefore in particular, there is still desired a provision of a catalyst for purifying exhaust gas containing nitrogen oxides, which has a high activity in a low-temperature region (especially 200°C or lower) that is said to be important for a selective reduction catalyst for exhaust gas containing nitrogen oxides, and which can suppress activity reduction.

Accordingly, an object of the present invention is to provide a catalyst for purifying exhaust gas containing nitrogen oxides, which has a high activity in a low-temperature region (especially 200°C or lower) that is said to be important for a selective reduction catalyst for exhaust gas containing nitrogen oxides, and which can suppress activity reduction thereof, and to provide a transition metal-loaded zeolite useful for such purification catalysts.

Solution to Problem

Regarding transition metals loaded on zeolite, there are some investigations and reports relating to a state of loading of the transition metals that exist outside the framework structure of transition metal-loaded zeolite.

For example, comparison and analysis of the copper-loaded states observed for Cu-SSZ-13 zeolite (CHA-type zeolite), Cu-ZSM-5 (MFI-type zeolite) and Cu-$\beta$ zeolite (beta-type zeolite) were reported in NPL 1, and it has been reported therein that an absorption peak caused by d-d transition of $Cu^{2+}$ is observed at around a wavenumber of 12,500 $cm^{-1}$ in the absorption intensity chart obtained according to ultraviolet-visible light-near infrared (UV-Vis-NIR) spectroscopy, whereas an absorption peak derived from $[Cu_2(\mu\text{-}O)]^{2+}$ Mono($\mu$-oxo) dicopper (hereinafter referred to as "dimer") is observed at around a wavenumber of 22,000 $cm^{-1}$ in the absorption intensity chart, and it is known that absorption peaks appear at different wavenumbers depending on the structure of a copper oxide dimer.

NPL 2 reported that, in Cu-ZSM-5, SCR reaction is progressed with repeated NO molecule adsorption and oxygen desorption on $[Cu_2(\mu\text{-}O)_2]^{2+}$ Bis($\mu$-oxo) dicopper. Thus, it is widely known that a copper oxide dimer loaded on zeolite is an active site to exhibit SCR reaction.

Further, as a method for investigating the amount and the strength of acid sites in a zeolite catalyst, there is known a method that includes causing ammonia ($NH_3$), as a base probe molecule, to be adsorbed on a zeolite catalyst and then heating the catalyst to measure the amount (strength) of the ammonia desorbed therefrom and the desorption temperature (ammonia temperature-programmed desorption, hereinafter this may be referred to as $NH_3$-TPD). For example, NPL 3 shows a spectral analysis result of Cu-SSZ-13 according to this $NH_3$-TPD, and reports that in the case where the $NH_3$ adsorption temperature is 170°C, two peaks are observed, and in the case where the $NH_3$ adsorption temperature is 230°C, only one peak is observed.

However, no report has heretofore been made regarding the state of loading of a transition metal in a catalyst for purifying exhaust gas containing nitrogen oxides that uses an AEI-type or AFX-type zeolite.

Given the situation, consequently, the present inventors have specifically noted the state of a transition metal contained in an AEI-type or AFX-type zeolite, which is used in a catalyst for purifying exhaust gas containing nitrogen oxides that uses an AEI-type or AFX-type zeolite, and have first investigated the state of the transition metal contained in a transition metal-loaded AEI-type zeolite with ultraviolet-visible-near infrared (UV-Vis-NIR) spectroscopy and $NH_3$-TPD.

With that, the present inventors have further made assiduous studies with reference to NPLs 1 and 2 and have concluded that, in a measurement of the transition metal-loaded AEI-type or AFX-type zeolite by the ultraviolet-visible-near infrared (UV-Vis-NIR) spectroscopy, the absorption intensity observed at around 32,500 $cm^{-1}$ is a peak derived from a dimer or a cluster composed of a few to dozens of molecules formed through oxidation of a transition metal, that the absorption intensity observed at around 12,500 $cm^{-1}$ is a peak derived from the inter-orbit charge transfer of a transition metal cation and is photoabsorption due to electron transition between specific orbits inside a transition metal cation, that when the proportion of a dimer or cluster increases relative to a transition metal cation, hydrothermal durability lowers and the lifetime of a catalyst or an adsorbent shortens, and that the maximum peak intensity between 200°C and 400°C measured by $NH_3$-TPD is a peak derived from a transition metal and the maximum peak intensity between 450 and 600°C is a peak derived from zeolite.

Then, surprisingly the present inventors have found that, in a zeolite having a structure designated as AEI or AFX, a dimer such as $[Cu_2(\mu\text{-}O)_2]^{2+}$ Bis($\mu$-oxo) dicopper lowers the hydrothermal durability of the zeolite. Namely, the present inventors have found that, when the ratio between absorption intensities in specific regions obtained through a measurement of a transition metal-loaded zeolite according to an ultraviolet-visible-near infrared (UV-Vis-NIR) spectroscopy, and the ratio between maximum peak intensities obtained in different temperature ranges through a measurement of a transition metal-loaded zeolite according to ammonia temperature-programmed desorption each is controlled to fall within a specific range, a transition metal-loaded AEI or AFX-type zeolite excellent in catalyst performance for purifying exhaust gas containing nitrogen oxides can be provided, and have completed the present invention.

The invention is a transition metal-loaded zeolite according to claim 1, a method of using a transition metal-loaded zeolite according to claim 7, and a method for producing a transition metal-loaded zeolite according to claim 12.

Additional embodiments are set out in the dependent claims 2-6 and 8-11.

Advantageous Effects of Invention

According to the present invention, there can be provided a catalyst for purification of exhaust gas containing nitrogen oxides, which has a high activity at a low-temperature region (especially 200°C or lower) that is important for a selective reduction catalyst for exhaust gas containing nitrogen oxides, and which can suppress activity reduction thereof.

Brief Description of Drawings

Fig. 1 is a chart diagram showing an XRD pattern of an AEI-type zeolite used in Examples 1 and 2 and Comparative Examples 1 and 4.
Fig. 2 is a chart diagram showing an XRD pattern of an AEI-type zeolite used in Example 3.
Fig. 3 is a chart diagram showing an XRD pattern of an AEI-type zeolite used in Comparative Example 2.
Fig. 4 is a chart diagram showing an XRD pattern of an AEI-type zeolite used in Comparative Example 3.

Description of Embodiments

Hereinunder, embodiments of the present invention are described in detail, but the following description is for examples (typical examples) of embodiments of the present invention, and the present invention is not whatsoever restricted by the contents thereof.

<Transition Metal-Loaded Zeolite>

The transition metal-loaded zeolite of the present invention is as described in claim 1.

Preferably, the transition metal-loaded zeolite further satisfies the following (3):
(3) the molar ratio M/Al is 0.1 or more and 0.35 or less.

The transition metal-loaded zeolite of the present invention is used, for example, for a nitrogen oxide purifying catalyst for purifying nitrogen oxides.

Hereinunder, the transition metal-loaded zeolite to be used in the present invention is described in more detail. The transition metal-loaded zeolite of the present invention (hereinafter this may be referred to as "the present metal-loaded zeolite") is one in which copper is loaded on zeolite having a structure designated as AEI (hereinafter these may be referred to as "AEI-type zeolite") and AEI is a code to indicate a zeolite with AEI framework according to a code system for identifying the framework structure of zeolite that is defined by International Zeolite Association IZA.

These structures are characterized by X-ray diffraction data. However, in the case of analyzing an actually formed zeolite, the data thereof may be influenced by the zeolite growth direction, the ratio of constituent elements, adsorbed substances, presence of defects, the dry condition and the like, and therefore the intensity ratio of each peak and the peak positions may vary in some degree, and accordingly, in fact, numerical data that are absolutely identical with those of the parameters of the AEI framework described in the definition by IZA are not always obtained, and thus deviation of 10% or so is acceptable.

Prominent peaks of a zeolite with AEI framework include, for example, in the case of using a CuKα X-ray, a peak for the 110 plane at $2\theta = 9.5° \pm 0.2°$, peaks for the 202 and -202 planes at $2\theta = 16.1° \pm 0.2°$ (these are extremely close to each other so that they may often overlap each other), a peak for the 022 plane at $16.9° \pm 0.2°$, and a peak for the 310 plane at $20.6° \pm 0.2°$.

Zeolite is one of zeolites defined by International Zeolite Association (IZA), and the present metal-loaded zeolite is one containing at least aluminum (Al) and silicon (Si) as atoms constituting the framework structure thereof, and a part of these atoms may be replaced with any other atom (Me).

Examples of the other atom (Me) that may be contained therein include one or more atoms of lithium, magnesium, titanium, zirconium, vanadium, chromium, manganese, iron, cobalt, nickel, palladium, copper, zinc, gallium, germanium, arsenic, tin, calcium and boron.

The present metal-loaded zeolite is an aluminosilicate zeolite containing, as the atoms constituting the framework structure thereof, at least oxygen, aluminum (Al) and silicon (Si).

(Molar Ratio M/Al)

The present metal-loaded zeolite is preferably such that the abundance ratio (M/Al) by mol of the transition metal M to the aluminum atom contained in zeolite is 0.1 or more and 0.35 or less. As the molar ratio M/Al in the metal-loaded zeolite of the present invention is 0.1 or more and 0.35 or less, the transition metal M can be uniformly loaded on the zeolite acid site in the form of a cation thereof, and can act as an active site.

More preferably, the molar ratio M/Al is 0.12 or more and 0.32 or less, even more preferably 0.15 or more and 0.30 or less. In the case where the molar ratio is set within the range, a risk of reduction in active sites or no expression of catalytic performance can be avoided, and there is no concern of any remarkable metal aggregation or reduced catalytic performance.

The amount of the copper in the transition metal-loaded zeolite is 2.0 parts by weight or more and 10 parts by weight or less relative to 100 parts by weight of the zeolite.

(Ratio of Absorption Intensity)

The ratio of absorption intensity of the present metal-loaded zeolite is less than 0.4. The ratio of absorption intensity (hereinafter referred to as "absorption intensity ratio") is a value calculated from the following expression (I) according to ultraviolet-visible-near infrared spectroscopy (UV-Vis-NIR), and the measurement method and the condition are as described in the section of Examples to be given hereinunder.

$$\text{Intensity } (32,500 \text{ cm}^{-1})/\text{Intensity } (12,500 \text{ cm}^{-1}) \qquad (\text{I})$$

As the absorption intensity ratio of the present metal-loaded zeolite is controlled within said range, the proportion of the transition metal M that is loaded as a cation thereof, as for the state of the transition metal M loaded on zeolite, increases and therefore such transition metal M can effectively act as an active site. Preferably, the absorption intensity ratio is less than 0.35, more preferably less than 0.30, even more preferably less than 0.25, further more preferably less than 0.20.

The absorption at 12500 cm$^{-1}$ is an absorption peak derived from a transition metal cation. This is photoabsorption originated from electron transition between specific orbits in a transition metal cation, and is known to give a peak on a low wavenumber side. On the other hand, the absorption at 32500 cm$^{-1}$ is derived from a dimer or a cluster composed of a few to dozens molecules formed through transition metal oxidation. When the proportion of the dimer or the cluster increases relative to the transition metal M, the hydrothermal durability of the metal-loaded zeolite lowers, and thus, the lifetime thereof as a catalyst or an adsorbent shortens.

In the case where all the transition metals are loaded as cations, the photoabsorption at 32500 cm$^{-1}$ is zero (0), and the lower limit of the absorption intensity ratio is theoretically zero (0).

(Ratio of Maximum Peak Intensity)

The ratio of the maximum peak intensity of the present metal-loaded zeolite is 1.0 or more and 2.0 or less. The ratio of the maximum peak intensity is a value obtained according to ammonia temperature-programmed desorption (NH$_3$-TPD), and the measurement method and the condition are as described in the section of Examples to be given hereinunder.

The ratio of the maximum peak intensity of the present metal-loaded zeolite is described.

In the case of the present metal-loaded zeolite, a peak intensity obtained according to ammonia temperature-programmed desorption (NH$_3$-TPD) exists in at least each of a range of 200°C to 400°C and a range of 450°C to 600°C. The maximum peak intensity in a range of 450°C to 600°C measured according to NH$_3$-TPD means an ammonia desorption amount from the solid acid site of zeolite, and the maximum peak intensity in a range of 200°C to 400°C means an ammonia desorption amount from a transition metal or a transition metal oxide.

Accordingly, the ratio thereof (NH$_3$-TPD$_{200\sim400}$/NH$_3$-TPD$_{450\sim600}$, hereinafter this may be referred to as a maximum peak intensity ratio) is smaller when the amount of the loaded transition metal is larger or when the bonding to the zeolite solid acid site is stronger.

When the maximum peak intensity ratio is less than 1.0, the bonding between the loaded transition metal and the zeolite solid acid site is insufficient, and thus, the high-temperature steam durability of the metal-loaded zeolite is poor.

On the other hand, when the ratio is more than 2.0, Al existing outside the zeolite framework increases to cause structure defects.

Accordingly, when the maximum peak intensity ratio ($NH_3$-$TPD_{200\sim400}$/$NH_3$-$TPD_{450\sim600}$) is 1.0 or more and 2.0 or less, the metal-loaded zeolite can load a transition metal necessary for catalytic reaction without damaging the zeolite framework structure.

From the above-mentioned viewpoints, the maximum peak intensity ratio of the present metal-loaded catalyst is preferably 1.03 or more and 1.8 or less, more preferably 1.05 or more and 1.8 or less, even more preferably 1.1 or more and 1.5 or less.

In order to adjust the absorption intensity ratio and the maximum peak intensity ratio of the present metal-loaded zeolite within the above-mentioned ranges, respectively, the metal-loaded zeolite may be produced, for example, according to the production method mentioned below.

Apart from this, the absorption intensity ratio and the maximum peak intensity ratio may be controlled by calcinating in a moisturized atmosphere.

(Temperature in measuring maximum peak intensity)

Preferably, the maximum peak intensity of the present metal-loaded zeolite in a range of 200°C to 400°C as measured through $NH_3$-TPD falls in a range of 250°C to 400°C. The maximum peak intensity is a value obtained according to ammonia temperature-programmed desorption ($NH_3$-TPD), and the measurement method and the condition are as described in the section of Examples to be given hereinunder.

When the temperature to give the maximum peak intensity falls within a range of 250°C to 400°C, the transition metal is adsorbed at the solid acid site of zeolite as a cation thereof, and the catalytic activity of the metal-loaded zeolite therefore increases.

From this viewpoint, the maximum peak intensity appears more preferably in a temperature range of 300°C to 390°C, and even more preferably within a range of 325°C to 380°C.

There is a tendency that the temperature at which the maximum peak intensity of the present metal-loaded zeolite appears is decreased when the transition metal M loaded on zeolite is present at a state of an oxide, while it is increased when the transition metal M is present at a state of a cation. Consequently, by loading the transition metal M on an H-type zeolite, the temperature for the peak can be controlled.

<Nitrogen Oxide Purifying Catalyst>

The nitrogen oxide purifying catalyst of the present invention is a catalyst for purifying nitrogen oxides, which contains the transition metal-loaded zeolite of the present invention.

The nitrogen oxide purifying catalyst of the present invention can be used as a nitrogen oxide purifying catalyst in various fields, for example, by shaping a catalyst mixture containing the catalyst to have a desired shape (including film formation) by granulating, forming and the like.

In particular, the nitrogen oxide purifying catalyst of the present invention is useful as a SCR catalyst for exhaust gas treatment for automobiles, but the use thereof is not limited to that for automobiles.

The method for granulating and shaping the nitrogen oxide purifying catalyst of the present invention is not specifically limited, and various known methods are employable.

In general, a catalyst mixture containing the catalyst is shaped and is used in the form of the resultant shaped article. As for the form of the shaped article, preferably, a honeycomb form is employed.

In the case of using for purification of exhaust gas from automobiles, for example, the nitrogen oxide purifying catalyst of the present invention is mixed with an inorganic binder such as silica or alumina to prepare a slurry, and this is applied to the surface of a honeycomb-shaped article formed of an inorganic substance such as cordierite, and then calcined thereon to produce the shaped article.

Also the nitrogen oxide purifying catalyst of the present invention is kneaded with an inorganic binder such as silica or alumina and inorganic fibers such as alumina fibers or glass fibers, then shaped according to an extrusion method or a compression method, and subsequently calcined to produce a preferably honeycomb-shaped purification device.

The exhaust gas may contain any other components than nitrogen oxides, and for example, may contain hydrocarbons, carbon monoxide, carbon dioxide, hydrogen, nitrogen, oxygen, sulfur oxides and water.

In using the catalyst, a known reducing agent, for example, hydrocarbons or nitrogen-containing compounds, such as ammonia or urea, may be used.

Specifically, the nitrogen oxide purifying catalyst of the present invention can purify nitrogen oxides contained in various types of exhaust gas from diesel vehicles, gasoline vehicles, and various diesel engines, boilers and gas turbines in stationary power plants, ships, agricultural machines, construction machines, motorcycles and airplanes.

<Method for Producing Metal-Loaded Zeolite>

As one example of a method for producing the present metal-loaded zeolite, following process is illustrated: in which, by using a silicon atom raw material, an aluminum atom raw material, an alkali metal atom raw material, as needed, an organic structure-directing agent (this may be referred to as "template", and hereinafter, the organic structure-directing agent may be expressed as "SDA"), and, as necessary, a desired zeolite (hereinafter this may be referred to as "seed crystal zeolite"), an AEI-type aluminosilicate zeolite is hydrothermally synthesized, then the resultant zeolite is subjected to ion-exchange treatment for alkali metal removal, and thereafter a transition metal M is loaded on the zeolite according to an ordinary method such as an ion-exchange process or an impregnation process, and the resultant zeolite is calcined.

(Silicon Atom Raw Material)

The silicon atom raw material for use in the present invention is not specifically limited, and various known substances may be used. For example, zeolite having a framework density of less than 14 T/1000 Å$^3$ may be used, but preferably a silicon-containing compound other than zeolite, such as colloidal silica, amorphous silica, sodium silicate, trimethylethoxysilane, tetraethyl orthosilicate and aluminosilicate gel may be used. One of these may be used alone, or two or more thereof may be used as combined. Among these, a raw material which has such a state that the raw material can be fully uniformly mixed with other components and which can be dissolved particularly in water with ease is preferred, and colloidal silica, trimethylethoxysilane, tetraethyl orthosilicate and aluminosilicate gel are preferred.
The silicon atom raw material is used in such a manner that the amount of the other raw materials relative to the silicon atom raw material could fall within the preferred range to be mentioned hereinunder.

(Aluminum Atom Raw Material)

The aluminum atom raw material is not specifically limited, but is preferably one not substantially containing Si, including amorphous aluminum hydroxide, aluminum hydroxide with gibbsite structure, aluminum hydroxide with bayerite structure, aluminum nitrate, aluminum sulfate, aluminum oxide, sodium aluminate, boehmite, pseudo-boehmite, and aluminum alkoxide.
Amorphous aluminum hydroxide, aluminum hydroxide with gibbsite structure, and aluminum hydroxide with bayerite structure are particularly preferred, and among these, amorphous aluminum hydroxide is more preferred. One of these may be used alone, or two or more thereof may be used in combination. These raw materials having a stable quality are easily available, and significantly contribute toward cost reduction.
When the Si content of the aluminum atom raw material is low, the solubility of the material in alkali generally increases, and therefore the raw material mixture can be readily homogenized to facilitate crystallization. From these viewpoints, the use of an aluminum atom raw material having a Si content of 20% by weight or less is preferred. Also from the same viewpoints, the Si content of the aluminum atom raw material is preferably 15% by weight or less, more preferably 12% by weight or less, even more preferably 10% by weight or less.
The amount of the aluminum atom raw material to be used is, from the viewpoint of easiness in preparing a pre-reaction mixture or an aqueous gel to be obtained by ripening the mixture and from the viewpoint of production efficiency, in the case of using a seed crystal zeolite to be mentioned below, such that the molar ratio of aluminum (Al) in the aluminum atom raw material relative to silicon (Si) contained in the raw material mixture except the seed crystal zeolite is generally 0.02 or more, preferably 0.04 or more, more preferably 0.06 or more, even more preferably 0.08 or more. The upper limit is, though not specifically limited thereto, generally 2 or less, from the viewpoint of uniformly dissolving the aluminum atom raw material in an aqueous gel, preferably 1 or less, more preferably 0.4 or less, even more preferably 0.2 or less.

(Alkali Metal Atom Raw Material)

The alkali metal atom contained in the alkali metal atom raw material is not specifically limited, and any known one for use for zeolite synthesis is usable. It is preferable to perform crystallization in the presence of at least one alkali metal ion selected from the group consisting of lithium, sodium, potassium, rubidium and cesium. Because of the reasons mentioned below, in particular, a sodium atom among these is preferably contained.
Specifically, in the case where zeolite is used as a catalyst, the alkali metal atom to be taken into the crystal structure of zeolite in the synthesis process may be removed from the crystal through ion-exchange treatment. In such a case, for simplifying the step of removing an alkali metal atom, it is preferable that the alkali metal atom to be used for synthesis is a sodium atom.

Accordingly, 50 mol% or more of the alkali metal atom contained in the alkali metal atom raw material is preferably a sodium atom, and above all, 80 mol% or more of the alkali metal atom contained in the alkali metal atom raw material is preferably a sodium atom, and in particular, all is substantially a sodium atom.

On the other hand, in the case where the amount of the organic structure-directing agent to be mentioned below is kept to reduced level, it is preferable to adjust the sodium atom in the alkali metal atom contained in the alkali metal atom raw material to be not more than 50 mol%, and in such a case, the total molar ratio of the alkali metal atom relative to the organic structure-directing agent in the raw material mixture is preferably 1.0 or more and 10 or less.

Also in such a case, the main alkali metal atom contained in the raw material mixture is, for example, preferably a potassium atom alone, a cesium atom alone, or a mixture of a potassium atom and a cesium atom.

In the case where these alkali metal atoms are contained in the raw material mixture, crystallization easily proceeds and by-products (crystals with impurity) are hard to be generated.

As the alkali metal atom raw material, hydroxides, oxides, salts with inorganic such as sulfates, nitrate, phosphates, chlorides and bromides, salts with organic acid, such as oxalates and citrates, of the above-mentioned alkali metal atom may be used. One of alkali metal atom raw materials or two or more thereof may be contained.

The use of an alkali metal atom material in a suitable amount facilitates coordination of the organic structure-directing agent to be mentioned below to aluminum in a preferred state, thereby facilitating formation of target crystal structure. In particular, in the case where 50 mol% or more of the alkali metal atom contained in the alkali metal atom raw material in the raw material mixture is a sodium atom, the molar ratio of the sodium atom relative to the organic structure-directing agent in the raw material mixture is preferably 0.1 or more and 2.5 or less. The lower limit of the molar ratio is preferably 0.15 or more, especially preferably 0.2 or more, more preferably 0.3 or more, even more preferably 0.35 or more. On the other hand, the upper limit of the molar ratio is preferably 2.4 or less, especially preferably 2 or less, more preferably 1.6 or less, even more preferably 1.2 or less.

On the other hand, also in the case where less than 50 mol% of the alkali metal atom contained in the alkali metal atom raw material is a sodium atom, the use of the alkali metal atom material in a suitable amount facilitates coordination of the organic structure-directing agent to be mentioned below to aluminum in a preferred state, thereby facilitating formation of target crystal structure. Accordingly, from these viewpoints, in the case where less than 50 mol% of the alkali metal atom contained in the alkali metal atom raw material is a sodium atom, the molar ration of the alkali metal atom relative to the organic structure-directing agent in the raw material mixture is preferably 1.0 or more and 10 or less. The lower limit of the molar ratio is preferably 1.3 or more, especially preferably 1.5 or more, more preferably 1.8 or more, even more preferably 2.0 or more. On the other hand, the upper limit thereof is preferably 8 or less, especially preferably 6 or less, more preferably 5 or less, even more preferably 4 or less.

In the case where less than 50 mol% of the alkali metal atom contained in the alkali metal atom raw material is a sodium atom, a preferred alkali metal atom raw material is a potassium atom raw material alone, a cesium atom raw material alone or a mixture of a potassium atom raw material and a cesium atom raw material, as described above. In the case where a potassium atom raw material or a cesium atom raw material is used, the zeolite yield increases as compared with that in the case where a sodium atom raw material is used alone, and in particular, a mixture of a potassium atom raw material and a cesium atom raw material is especially preferably used. In the case where a potassium atom raw material or a cesium atom raw material is used, it may remain in the resultant AEI-type zeolite, and thus, a zeolite containing potassium and/or cesium in a molar ratio of 0.001 or more and 1.0 or less relative to aluminum therein can be obtained. The ratio is, in terms of % by weight based on zeolite, generally 0.01% by weight or more and 10 % by weight or less, more preferably 0.05% by weight or more and 5% by weight or less. In the case of such a zeolite, the amount of the organic structure-directing agent to be used in the production method therefor may be reduced and the hydrothermal synthesis time is short.

(Organic Structure- Directing Agent)

As the organic structure-directing agent, various known substances such as tetraethylammonium hydroxide (TEAOH) and tetrapropylammonium hydroxide (TPAOH) can be used. In addition, for example, the following substances may also be used.

N,N-diethyl-2,6-dimethylpiperidinium cation,
N,N-dimethyl-9-azoniabicyclo[3.3.1]nonane cation,
N,N-dimethyl-2,6-dimethylpiperidinium cation,
N-ethyl-N-methyl-2,6-dimethylpiperidinium cation,
N,N-diethyl-2-ethylpiperidinium cation,
N,N-dimethyl-2-(2-hydroxyethyl)piperidinium cation,
N,N-dimethyl-2-ethylpiperidinium cation,

N,N-dimethyl-3,5-dimethylpiperidinium cation,
N-ethyl-N-methyl-2-ethylpiperidinium cation, 2,6-dimethyl-1-azonium[5.4]decane cation,
N-ethyl-N-propyl-2,6-dimethylpiperidinium cation,
N,N,N',N'-tetraethylbicyclo[2.2.2]oct-7-ene-2,3:5,6-dipyrrolidinum dication, and 1,1'-(1,4-butanediyl)bis(1-azonia-4-azabicyclo[2.2.2]octane) dication. Among these, as for especially preferred nitrogen-containing organic structure-directing agents, N,N-dimethyl-3,5-dimethylpiperidinium cation, and N,N,N',N'-tetraethylbicyclo[2.2.2]oct-7-ene-2,3:5,6-dipyrrolidinium dication are preferred; specifically, N,N-dimethyl-3,5-dimethylpiperidinium hydroxide, or N,N,N',N'-tetraethylbicyclo[2.2.2]oct-7-ene-2,3:5,6-dipyrrolidinium hydroxide is preferably used.

As a phosphorus-containing organic structure-directing agent, substances such as tetrabutyl phosphonium and diphenyldimethyl phosphonium can be used.

However, there is a probability that phosphorus compounds may generate a harmful substance diphosphorus pentoxide in calcinating the synthesized zeolite to remove SDA. Therefore, nitrogen-containing organic structure-directing agents are preferred.

One of these organic structure-directing agents may be used alone, or two or more thereof may be used as combined.

With respect to the amount of the organic structure-directing agent to be used, in the case of using a seed crystal zeolite to be mentioned below, from the viewpoint of easiness in crystal formation, the molar ratio of the organic structure-directing agent relative to silicon (Si) contained in the raw material mixture except the seed crystal zeolite is generally 0.01 or more, preferably 0.03 or more, more preferably 0.1 or more, even more preferably 0.5 or more, and further more preferably 0.08 or more. For obtaining the effect of cost reduction, the molar ratio is generally 1 or less, preferably 0.8 or less, more preferably 0.6 or less, even more preferably 0.5 or less.

(Seed Crystal Zeolite)

As the seed crystal zeolite, zeolite having a framework density of 14 T/1000 $\mathring{A}^3$ or more may be exemplified. Here, the framework density is a value described by Ch. Baerlocher, et al. in ATLAS OF ZEOLITE FRAME WORK TYPES (Sixth Revised Edition, 2007, ELSEVIER), which is used as an indicator of density of framework used therein.

Specifically, the framework density means a number of T atoms (other atoms than oxygen atoms constituting the framework structure of zeolite) existing in a unit volume 1000 $\mathring{A}^3$ of zeolite, and the value is determined depending on the framework of zeolite.

Regarding the effects of using zeolite having a framework density of 14 T/1000 $\mathring{A}^3$ or more in a synthesis process for an AEI-type or AFX-type zeolite, it is presumed that the zeolite does not completely decompose into ions of the constituent elements in the raw material mixture before hydrothermal synthesis, and may be in a state where the zeolite is dissolved in the mixture in the form of an embryo composed of a few molecules thereof connecting to each other, and that the embryo form may assist proceeding of hydrothermal synthesis for an AEI-type or AFX-type zeolite.

In the point that the zeolite is unlikely to completely decompose into ions of the constituent elements thereof, the framework density of the zeolite is preferably 14 T/1000 $\mathring{A}^3$ or more, more preferably 14.1 T/1000 $\mathring{A}^3$ or more, even more preferably 14.2 T/1000 $\mathring{A}^3$ or more, and especially preferably 14.3 T/1000 $\mathring{A}^3$ or more. Most preferably, the framework density is 14.4 T/1000 $\mathring{A}^3$ or more.

However, when the framework structure is too excessively large, the seed crystal zeolite may exist in the mixture in an undissolved state, and accordingly, the desired framework density of zeolite is 20 T/1000 $\mathring{A}^3$ or less, more preferably 19 T/1000 $\mathring{A}^3$ or less, even more preferably 18.5 T/1000 $\mathring{A}^3$ or less, and especially more preferably 18 T/1000 $\mathring{A}^3$ or less.

From the viewpoint of the action mechanism of the seed crystal zeolite, preferred is one that contains d6r defined as a composite building unit by International Zeolite Association (IZA), in the framework thereof, among zeolite having a framework density of 14 T/1000 $\mathring{A}^3$ or more.

In the invention an AEI-type zeolite is used.

One of seed crystal zeolite may be used alone, or two or more thereof may be used as combined.

The amount of the seed crystal zeolite to be used is 0.1% by mass or more relative to $SiO_2$ when all silicon (Si) contained in the raw material mixture except the seed crystal zeolite is considered to be in the form of $SiO_2$, and is, for more smoothly promoting the reaction, preferably 0.5% by weight or more, more preferably 2% by weight or more, even more preferably 3% by weight or more, and especially more preferably 4% by weight or more.

The upper limit of the amount of the seed crystal zeolite to be used is, though not specifically limited thereto, generally 20% by weight or less for sufficiently attaining the effect of cost reduction, preferably 10% by weight or less, more preferably 8% by weight or less, even more preferably 5% by weight or less.

The seed crystal zeolite may be an uncalcined one not calcined after hydrothermal synthesis or may also be a calcined one that has been calcined after hydrothermal synthesis, but in order to express the function as crystal nuclei, preferably, the seed crystal zeolite is hardly soluble in alkali, and accordingly, an uncalcined zeolite is preferably used, rather than a calcined zeolite.

However, depending on the composition of the raw material mixture and on the temperature condition, an uncalcined zeolite could not dissolve and therefore could not express the function as a nuclei for crystallization in some cases. In such cases, it is preferable to use zeolite that has been calcined to remove SDA for solubility enhancement.

(Water)

The amount of water to be used is, from the viewpoint of easiness in crystal formation, and in the case of using a seed crystal zeolite, generally 5 or more as a molar ratio thereof relative to silicon (Si) contained in the raw material mixture except the seed crystal zeolite, preferably 7 or more, more preferably 9 or more, even more preferably 10 or more. The range is preferred as facilitating crystal formation. In addition, for sufficiently attaining the effect of reducing the cost for waste fluid treatment, the molar ratio is generally 50 or less, preferably 40 or less, more preferably 30 or less, even more preferably 25 or less.

(Mixing of Raw Materials (preparation of pre-reaction mixture))

In the above-mentioned production method for the present metal-loaded zeolite, the silicon atom raw material, the aluminum atom raw material, the alkali metal atom raw material, the organic structure-directing agent, and water, as described above, are mixed, then to the resultant mixture, a seed crystal zeolite is fully mixed, and the resultant pre-reaction mixture is processed for hydrothermal synthesis. The order of mixing these raw materials is not specifically limited, but preferably, from the viewpoint that, when an alkali solution is first prepared and then a silicon atom raw material and an aluminum atom raw material are added thereto, the raw materials can be more uniformly dissolved, it is preferable that water, an organic structure-directing agent and an alkali metal atom raw material are first mixed to prepare an alkali solution, and then an aluminum atom raw material, a silicon atom raw material and a seed crystal zeolite are added thereto in that order and mixed.

Furthermore, in the present invention, in addition to the above-mentioned aluminum atom raw material, silicon atom raw material, alkali metal atom raw material, organic structure-directing agent, water and seed crystal zeolite, any other additive, such as any other auxiliary additive that may be a component for assisting synthesis of zeolite, for example, acid component for promoting the reaction, and a metal stabilizer such as a polyamine may be added in any arbitrary step, as needed, and mixed to prepare the pre-reaction mixture. Further, as described below, a metal such as copper that may act as a catalyst in the hydrothermal synthesis step may also be added.

(Aging)

The pre-reaction mixture prepared in the manner as mentioned above may be processed for hydrothermal synthesis just after preparation thereof, but for the purpose of obtaining a zeolite having a high crystallinity, the pre-reaction mixture is preferably aged under a predetermined temperature condition for a certain period of time. In particular, in scaling up, stirrability may worsen and the mixing state of raw materials may be insufficient. Accordingly, it is preferable to age the raw materials by stirring them for a certain period of time to thereby improve the raw materials to be in a more uniform state. The aging temperature is generally 100°C or lower, preferably 95°C or lower, more preferably 90°C or lower, and the lower limit is not specifically defined, but is generally 0°C or higher, preferably 10°C or higher. The aging temperature may be kept constant during the aging treatment, but may be varied stepwise or continuously. The aging time is, though not specifically limited thereto, generally 2 hours or more, preferably 3 hours or more, more preferably 5 hours or more, and is generally 30 days or less, preferably 10 days or less, more preferably 4 days or less.

(Hydrothermal Synthesis)

Hydrothermal synthesis is carried out by putting the pre-reaction mixture prepared as above or the aqueous gel obtained by aging the mixture, into a pressure-resistant vessel, and leaving it at a predetermined temperature under an autogenetic pressure or under a vapor pressure in such a degree that may not detract from crystallization, and with stirring, or with rotating, or shaking the vessel, or in a static state.

The reaction temperature for hydrothermal synthesis is generally 120°C or higher, and is generally 230°C or lower, preferably 220°C or lower, more preferably 200°C or lower, even more preferably 190°C or lower. The reaction time is, though not specifically limited thereto, generally 2 hours or more, preferably 3 hours or more, more preferably 5 hours or more, and is generally 30 days or less, preferably 10 days or less, more preferably 7 days or less, even more preferably 5 days or less. The reaction temperature may be constant during the reaction, or may be varied stepwise or continuously.

The reaction under the condition mentioned above is preferred, so that the yield of the intended AEI-type zeolite is improved and any of zeolites with different framework types are hard to form.

(Collection of AEI-type Zeolite)

After the above-mentioned hydrothermal synthesis, the product, AEI-type zeolite is separated from the hydrothermal synthesis reaction liquid. The resultant zeolite (hereinafter referred to as "zeolite containing SDA and others") contains both or any one of an organic structure-directing agent and an alkali metal atom in the pores thereof. A method for separating the zeolite containing SDA and others from the hydrothermal synthesis reaction liquid is not specifically limited, and examples thereof generally include a method by filtration, decantation, direct drying or the like.

The zeolite containing SDA and others that has been separated and collected from the hydrothermal synthesis reaction liquid, can be optionally washed with water and dried if necessary, and can be calcined for removing the organic structure-directing agent and others used in its production therefrom, so as to give a zeolite not containing an organic structure-directing agent and others.

For treatment for removing both or any one of the organic structure-directing agent and the alkali metal atom, liquid-phase treatment using an acidic solution or an organic structure-directing agent decomposing component, ion-exchange treatment using a resin or the like, or thermal decomposition treatment may be employed, and a combination of these treatments may also be employed. In general, by calcining in an air or oxygen-containing inert gas or under an inert gas atmosphere at a temperature of 300°C to 1000°C, or by extracting with an organic solvent such as an aqueous ethanol solution, the contained organic structure-directing agent and others may be removed. Preferably, from the viewpoint of productivity, removal of the organic structure-directing agent and others by calcinating is preferred. In such a case, the calcinating temperature is preferably 400°C or higher, more preferably 450°C or higher, even more preferably 500°C or higher, and is preferably 900°C or lower, more preferably 850°C or lower, even more preferably 800°C or lower. As the inert gas, nitrogen or the like may be used.

In the above-mentioned production method, an AEI-type zeolite having a Si/Al ratio falling in a broad range can be produced by varying the composition ratio with respect to the mixture to be charged.

Accordingly, regarding the Si/Al ratio of the resultant AEI-type zeolite, though not specifically limited thereto and from the viewpoint that the presence of active sites as a catalyst in a larger number is preferable, the Si/Al ratio is 10 or less.

On the other hand, when a zeolite having a larger amount of Al in the framework thereof is exposed to a gas containing water vapor, a probability that the in-framework Al may be desorbed to cause structural disorder may increase, and therefore, the Si/Al ratio is preferably 2 or more, more preferably 3 or more, even more preferably 4 or more, especially preferably 4.5 or more. Summarizing these, in order to suppress the influence on desorption of in-framework Al and to maintain a higher catalytic activity, the Si/Al ratio is preferably 5.5 or more and 10 or less.

(Conversion Step into H-type)

The AEI-type zeolite produced in the above is converted into an H-type one and used. For conversion into an H-type zeolite, there may be mentioned a method including converting the alkali metal moiety derived from the alkali metal atom contained in the alkali metal atom raw material, or the aluminum atom raw material, the silicon atom raw material, the organic structure-directing agent and the seed crystal zeolite used in producing the zeolite, into an $NH_4$-type through ion-exchange with an ammonium ion such as $NH_4NO_3$, or $NH_4Cl$, followed by calcinating into an H-type, and a method of directly converting the zeolite with an acid such as hydrochloric acid into an H-type. Hereinunder, the case where the cation contained in AEI-type is converted into $NH_4^+$ is referred to as an $NH_4$-type and the case where the cation is converted into $H^+$ is referred to as an H-type.

In the case of removing an alkali metal with a strong acid such as hydrochloric acid, aluminum in a zeolite framework may be desorbed from the framework by an acid to lower hydrothermal durability of the resultant zeolite. Accordingly, a method of removing an alkali metal with an acid solution having a pH of 3.0 or more is preferred. In an ion-exchange method, the cation ($H^+$ or $NH_4^+$) of an acid solution is exchanged with an alkali metal in zeolite and is thereby removed. Accordingly, it is preferable that the cation concentration of the acid solution is not less than the equivalent amount relative to the alkali metal. The cation concentration of the acid solution is at least 0.50 mol per liter, preferably 0.75 mol or more, even more preferably 1.0 mol or more. From the viewpoint of cost reduction, the concentration is preferably 3.0 mol or less, more preferably 2.0 or less. A method of removing an alkali metal through ion exchange using an ammonium salt is preferred since the cation concentration of the aqueous solution can be increased without any decrease in the pH to 3.0 or less.

As the ammonium salt, ammonium nitrate, ammonium chloride, ammonium carbonate and the like may be exemplified. In terms of a high solubility in water, ammonium nitrate or ammonium chloride is preferred, and in terms of not generating any corrosive gas in the calcinating step for conversion into an H-type after ion-exchange treatment, ammonium nitrate is most preferred.

The temperature at which ion exchange is carried out is preferably higher within a range within which the aqueous solution does not boil, for promoting the ion-exchange treatment. In general, the temperature is 30°C or higher and 100°C or lower, preferably 40°C or higher and 95°C or lower, most preferably 50°C or higher and 90°C or lower. For further promoting ion exchange, a mixed slurry of zeolite and an acid solution is preferably stirred.

The time for ion exchange is not specifically limited thereto, and ion exchange is preferably continued until the H-cation of zeolite reaches equilibrium. The time is at least 10 minutes or more, preferably 20 minutes or more, more preferably 30 minutes or more.

In the $NH_4$-type zeolite of the present invention, preferably, the remaining alkali metal amount is 1% by weight or less as a metal oxide thereof relative to zeolite. By reducing the remaining alkali metal amount, such disorder that contact between the remaining alkali and water vapor may induce the destruction of the zeolite framework can be prevented. In addition, a transition metal cation can be readily adsorbed at stable sites and hydrothermal durability is thereby improved. Accordingly, the amount is more preferably 0.8% by weight or less, further more preferably 0.6% by weight or less.

The $NH_4$-type zeolite produced through ion exchange is converted into an H-type by calcinating (the calcinating step for conversion into an H-type is referred to as H-type conversion calcinating). Replacing by an H cation that has a smaller ion radius than that of an $NH_4$ cation is preferred, from the viewpoints that the ion exchange ratio in loading a transition metal M is increased, cation adsorption thereof at zeolite acid points is facilitated, and the transition metal M are likely to be uniformly loaded on the entire catalyst.

In H-type conversion calcinating, the $NH_4$ cations adsorbed at zeolite acid sites are removed by calcinating, and therefore, the calcinating temperature is preferably 400°C or higher and 800°C or lower, and more preferably, the calcinating is carried out in the presence of oxygen. In general, the $NH_4$ cations having adsorbed to AEI-type or AFX-type zeolite acid sites remove at 400°C or higher, and therefore calcinating at 400°C or higher prevents the cations from remaining on the acid sites. In addition, when the calcinating temperature is 800°C or lower, aluminum is prevented from desorbing from a zeolite framework and hydrothermal durability of the resultant zeolite can be thereby prevented from lowering. Preferably, the calcinating temperature is 425°C or higher and 700°C or lower, more preferably 450°C or higher and 650°C or lower, even more preferably 475°C or higher and 600°C or lower.

The time for carrying out of H-type conversion calcinating is not specifically limited, but is necessarily a time within which the $NH_4$ cations having adsorbed to zeolite can be completely removed. The time is at least 15 minutes or more, preferably 30 minutes or more, more preferably 1 hour or more. By preventing the time for H-type conversion calcinating from being too much prolonged, it is possible to prevent productivity reduction, and hydrothermal durability loss owing to aluminum removal from a zeolite framework. Accordingly, the time is preferably 5 hours or less, more preferably 4 hours or less.

In the H-type zeolite of the present invention, preferably, the remaining $NH_4$ cation amount is 1.0 mmol/g or less, more preferably 0.5 mmol/g or less, even more preferably 0.25 mmol/g or less, most preferably 0.1 mmol/g or less. The reduction of the remaining $NH_4$ cation amount prevents reduction in the ion-exchange efficiency with a transition metal cation.

For preventing aluminum removal from a zeolite framework, preferably, the water vapor concentration contained in a circulation gas is 20% by volume or less. The circulation gas may be air or an inert gas.

(Method for Loading Transition Metal)

The method for causing a transition metal M to be loaded on an AEI-type zeolite is not specifically limited, for which there are mentioned an ion-exchange method, an impregnation loading method, a precipitation loading method, a solid-phase ion-exchange method, a CVD method and a spray drying method that are generally employed in the art. Above all, an ion-exchange method, an impregnation loading method and a spray drying method are preferred, and an ion-exchange method is particularly preferred.

As the raw material for the transition metal M, those that are highly soluble in water and do not cause precipitation of the transition metal M or compounds thereof are preferred. In general, inorganic acid salts; such as sulfates, nitrates, phosphates, chlorides or bromides; of a transition metal M, organic acid salts, such as acetates, oxalates or citrates thereof, as well as organic metal compounds, such as pentacarbonyl or ferrocene, are used. Among these transition metal compounds, nitrates, sulfates, and acetates are preferred. A transition metal compound-containing liquid, which is prepared in the form of an aqueous solution or a dispersion of such a transition metal compound, is brought into contact with an H-type zeolite to cause the resultant zeolite to load the transition metal compound. Two or more transition metal raw materials differing in the metal species or the compound species may be used in combination.

The H cation of the zeolite is replaced with a transition metal M cation to cause the zeolite to load the transition metal M. As cation exchange is sufficiently attained by lowering H cation concentration contained in the transition metal compound-containing liquid, the transition metal compound-containing liquid is preferably a weak acid solution having a low H cation concentration. The transition metal compound-containing liquid has a pH of at least 3.0 or more, preferably 3.5 or more, particularly preferably 4.0 or more. From this viewpoint, a weak acid salt is most preferred as the raw material for the transition metal M. In the case where a solution of a strongly acidic sulfate or nitrate is diluted to use at a low concentration, the transition metal M cation concentration of the transition metal-containing liquid lowers and the necessary steps for loading a desired amount of the transition metal increase unfavorably. On the other hand, when an aqueous solution of a strongly acidic sulfate or nitrate is subjected to pH control with aqueous ammonia or the like, a hydroxide of a transition metal M may precipitate so that the transition metal could not be loaded as a cation.

A neutral chloride has a lowest H cation concentration and readily enables cation exchange, but chlorides and hydrochlorides are unsuitable, since a corrosive gas may be generated in calcining after a process of loading a transition metal M to be mentioned hereinunder.

Details of a case of loading a transition metal M according to an ion-exchange method are described, but the loading method is not whatsoever limited thereto. Loading according to an ion-exchange method is performed through a process of processing an H-type AEI zeolite via the following steps (1) to (5) to obtain a transition metal-loaded zeolite. If desired, a spray drying method or the like may be utilized, so that the steps (3) and (4) may be omitted.

(1) Dispersion step: An H-type zeolite is dispersed in a transition metal M-containing liquid and mixed therein to give a mixed slurry.
(2) Stirring step: The mixed slurry of (1) is stirred and treated for ion exchange.
(3) Separation/washing step: The zeolite is separated from the liquid, and the unnecessary transition metal atom raw material is washed away.
(4) Drying step: Water is removed from the zeolite.
(5) Calcinating step: The organic substances and others contained in the transition metal raw material are removed by calcinating.

In order to uniformly disperse the H-type zeolite in the transition metal M-containing liquid in the dispersion step, the proportion of the H-type zeolite in the slurry is preferably 50% by weight or less, more preferably 40% by weight or less, even more preferably 20% by weight or less. On the other hand, for preventing the proportion in the slurry from lowering and therefore preventing the treatment tank necessary for ion exchange from reaching a large size, the proportion is preferably 1% by weight or more, more preferably 2% by weight or more, even more preferably 5% by weight or more. When the proportion is 5% by weight or more and 20% by weight or less, an H-type zeolite can be uniformly dispersed in a transition metal M-containing liquid.

As mentioned above, the concentration of the transition metal contained in the transition metal M-containing liquid is preferably controlled such that the pH of the liquid is 3.0 or more. The transition metal concentration is, in terms of a transition metal, preferably 0.1% by weight or more and 3.0% by weight or less, more preferably 0.15% by weight or more and 2.0% by weight or less, even more preferably 0.3% by weight or more and 1.5% by weight or less. When the transition metal concentration is 0.1% by weight or more, the amount of the transition metal to be loaded can be suitable and the loading step can be prevented from being prolonged. When the concentration is 3.0% by weight or less, the pH of the aqueous solution is not on a strongly acidic level and the ion-exchange rate between the H cation and the transition metal M cation can be prevented from lowering.

In the stirring step, the mixed slurry prepared in the dispersion step (1) is stirred to attain ion exchange between the H cation and the transition metal M cation. The cation exchange rate can be increased by stirring the mixed slurry to thereby enhance the contact efficiency between zeolite and the transition metal M-containing liquid or by heating the mixed slurry. Specifically, heating with stirring is most preferred. For preventing water evaporation from the mixed slurry, preferably, heating with stirring is carried out in a closed vessel. The material of the closed vessel is not specifically limited, but is preferably SUS in view of the chemical resistance thereof and of the possibility of suppressing metal release. The heating temperature is, for preventing water evaporation and for promoting ion exchange, at least 20°C or higher, preferably 30°C or higher, most preferably 40°C or higher.

In the separation/washing step, zeolite and the transition metal M-containing liquid are separated from the mixed slurry, and then the adhering transition metal atom raw material is washed away with water or the like. With no specific limitation thereon, the separation may be carried out according to any ordinary method such as reduced-pressure filtration, pressure filtration, filter pressing, decantation, or direct drying. The separated zeolite is washed with water, acid, organic solvent or the like to remove the adhering transition metal atom raw material therefrom. In the case where the washing step is omitted and a too much transition metal atom raw material has remained on the zeolite surface, the transition metal could not be in the form of cation in the subsequent drying/calcinating step to be mentioned below but may form an oxide to lower the hydrothermal durability of the resultant zeolite. Not specifically limited, the liquid to be used for washing may be any one capable of dissolving the transition metal atom raw material, and from the viewpoint of preventing zeolite from being degraded, water is most preferred. As a result of assiduous studies, the present inventors have found that, when washing is repeated until the electroconductivity of the liquid after washing reaches 200 $\mu$S/m or less, aggregation of a copper oxide dimer on the zeolite surface can be prevented after calcinating as mentioned below, and the resultant zeolite can have high-level hydrothermal durability.

In the drying step, water contained in the zeolite is removed. If desired, the drying step may be combined with the subsequent calcinating step to be mentioned below. During drying, the loaded transition metal may oxidize and aggregate, and therefore, the time to be used for the drying step is preferably short. Preferably, the drying time is 48 hours or less, more preferably 36 hours or less, even more preferably 24 hours or less.

By calcinating the transition metal-loaded zeolite powder obtained in the drying step, unnecessary components such as organic substances contained in the transition metal raw material can be removed. The transition metal cations introduced into zeolite pores according to an ion-exchange method exist therein as a hydrated state with a hydroxy group adsorbing thereto, and through dehydration during calcinating step, these come to strongly bond to zeolite acid sites and are stabilized as cations. In such a case, the calcinating temperature is preferably set within 500°C or higher and 850°C or lower, and more preferably, the zeolite powder is calcined in the presence of oxygen.

At lower than 500°C, the unnecessary components could not be immediately removed and the transition metal may oxidize and aggregate, and in the case of the present invention where the transition metal M is copper, a copper oxide dimer such as typically $[Cu_2(\mu\text{-}O)_2]^{2+}$bis($\mu$-oxo)dicopper may form.

At a higher calcinating temperature, the dispensability of the transition metal can be improved, and therefore the transition metal can be stabilized as a cation, but at higher than 850°C, the zeolite structure may be broken to reduce catalytic performance. Such oxidation and aggregation in the calcinating step is known also for other transition metals than copper. For example, an iron cation not adsorbed at a zeolite acid site forms iron oxide in calcinating to reduce catalytic performance.

For example, in the case of the present invention where the transition metal M is copper, when the calcinating temperature is adjusted within the specific range, the proportion of a copper oxide dimer $[Cu_2(\mu\text{-}O)_2]^{2+}$bis($\mu$-oxo)dicopper in the state of copper loaded on zeolite can be reduced and the proportion of a divalent cation ($Cu^{2+}$) can be increased. As a result, the absorption intensity observed at around 32,500 $cm^{-1}$ can be reduced and the resultant zeolite can therefore express a high-level performance as a SCR catalyst.

In the production method for the transition metal-loaded zeolite of the present invention, from the above-mentioned viewpoints, the calcinating temperature in the calcinating step after a transition metal compound has been loaded on zeolite is preferably set within 550°C or higher and 825°C or lower, more preferably 600°C or higher and 800°C or lower. In particular, in the case where the transition metal M to be loaded is copper alone, such a temperature rage is preferably used for calcinating since a SCR catalyst excellent in durability in a low-temperature range (for example, 200°C) can be obtained by using a zeolite calcined at a temperature set within the range.

From the above, it is especially preferable to employ a method that includes converting an AEI zeolite obtained through hydrothermal synthesis into an H-type zeolite, then bringing the H-type zeolite into contact with a transition metal-containing liquid and thereafter calcinating the resultant at a temperature of 500°C or higher and 850°C or lower.

In the production method for the transition metal-loaded zeolite of the present invention, further, the above-mentioned calcinating is carried out preferably in the presence of oxygen. By calcinating in the presence of oxygen and at a specific high temperature, the performance of the resultant transition metal-loaded zeolite as a catalyst can be improved more.

Above all, in the case where organic substances are contained in the transition metal compound, the calcinating is preferably carried out in the presence of oxygen since the organic substances can be immediately calcined away. In addition, especially for highly dispersing the transition metal, the circulation gas to be used in the calcinating step preferably contains 20% by volume or less of water vapor.

[Method of Using Metal-Loaded Zeolite]

The present metal-loaded zeolite can be used as a catalyst for purifying nitrogen oxides. Specifically, the present metal-loaded zeolite can be used for purifying nitrogen oxides in exhaust gas by bringing it into contact with exhaust gas containing nitrogen oxides.

The mode of using the metal-loaded zeolite is not specifically limited, and for example, as described above, a mixture of a catalyst containing the present metal-loaded zeolite is formed into a shaped article (including film formation), and thereby the resultant article shaped in a desired form may be used as a device for purifying nitrogen oxide.

The exhaust gas may contain any other component than nitrogen oxides, and for example, may contain hydrocarbons, carbon monoxide, carbon dioxide, hydrogen, nitrogen, oxygen sulfur oxides and water.

Specifically, the nitrogen oxides-containing exhaust gas include various types of nitrogen oxides-containing exhaust gas discharged from diesel vehicles, gasoline vehicles, and from various diesel engines, boilers and gas turbines for power generation for stationary use, ships, agricultural machines, construction machines, motorcycles and airplanes.

In using the present metal-loaded zeolite, the condition for contact between catalyst and exhaust gas is, though not specifically limited thereto, such that the space velocity of exhaust gas is generally 100/h or more, preferably 1000/h or more, even more preferably 5000/h or more, and is generally 500000/h or less, preferably 400000/h or less, more preferably 200000/h or less, the temperature is generally 100°C or higher, more preferably 125°C or higher, even more preferably 150°C or higher, and is generally 1000°C or lower, preferably 800°C or lower, more preferably 600°C or lower, especially preferably 500°C or lower.

In such exhaust gas treatment, the present metal-loaded zeolite may be used along with a reducing agent, and the coexistence of the reducing agent enhances efficient purification of exhaust gas. As the reducing agent, one or more of ammonia, urea, organic amines, carbon monoxide, hydrocarbons and hydrogen may be used, and ammonia and urea are preferred.

Hereinunder the present invention is illustrated specifically with reference to Examples and Comparative Examples, but the scope of the present invention is not whatsoever restricted by the following Examples.

In the following Examples and Comparative Examples, measurement of physical properties and treatment were carried out under the conditions mentioned below.

<Ultraviolet-visible-near infrared spectroscopy (UV-Vis-NIR)>

The absorption intensity ratio of transition metal-loaded zeolite was determined through ultraviolet-visible-near infrared spectroscopy (UV-Vis-NIR) as follows.

(Sample Preparation)

0.6 g of the catalyst sample (catalysts 1 to 7) produced in Examples and Comparative Examples and 2.4 g of barium sulfate powder were mixed in an agate mortar for 5 minutes, then spread on a glass Petri dish, and stored in a desiccator which was kept at a relative humidity of 50% by using a saturated magnesium nitrate aqueous solution, for 12 hours for moisture absorption.

The moisture-absorbed powder was filled in a sample holder having a same shape so that the sample amount could be constant. These samples were analyzed through ultraviolet-visible-near infrared spectroscopy (UV-Vis-NIR) under the measurement condition mentioned below to determine the absorption intensity ratio thereof.

(Measurement condition)

Measurement apparatus: UV-3100s (SHIMADZU)
Light source: Xe lamp
Wavenumber range: 8000 to 40000 cm$^{-1}$
Slit width: 20 nm
Measurement method: reflection method

<Ammonia temperature-programmed desorption (NH$_3$-TPD)>

The maximum peak intensity of transition metal-loaded zeolite was measured according to ammonia temperature-programmed desorption (NH$_3$-TPD) as mentioned below.

(Sample preparation)

The catalyst sample (catalysts 1 to 7) produced in Examples and Comparative Examples was spread on a glass Petri dish, and stored in a desiccator which was kept at a relative humidity of 50% by using a saturated magnesium nitrate aqueous solution, for 12 hours for moisture absorption.

(Moisture content measurement)

The thermogravimetric change was measured from room temperature up to 800°C under air circulation, and the change in weight was referred to as a moisture content.

(Measurement condition)

50 mg of the moisture-absorbed catalyst sample (catalysts 1 to 7) was filled in a quartz cell, and analyzed under the condition mentioned below.

Measurement apparatus: BELCAT-II (manufactured by Microtrack Bell Corporation)
Pretreatment temperature: 450°C
Pretreatment time: 1 hr
Ammonia adsorption temperature: 160°C
Ammonia adsorption time: 15 min
Desorption temperature range: 160°C to 800°C

<Measurement of $NH_3$ residual amount>

The $NH_3$ amount remaining in H-type zeolite without leaving by calcinating is confirmed. The residual amount of $NH_3$ was determined by measurement of the desorption amount of $NH_3$ in ammonia temperature-programmed desorption ($NH_3$-TPD) without any adsorption of ammonia.

<Evaluation of catalytic activity>

The catalyst sample (catalysts 1 to 7) produced in Examples and Comparative Examples was press-formed, then ground and sieved to regulate particle size in range of 0.6 to 1.0 mm. One ml of the size-regulated catalyst sample was filled in a normal pressure fixed-bed flow type reactor. While a gas having the composition shown in Table 1 below was passed through the catalyst layer at a space velocity SV = 200000/h, the catalyst layer was heated.

At each temperature of 175°C, 200°C, 250°C, 300°C, 400°C or 500°C, when the outlet NO concentration has become constant, the nitrogen oxide removal activity of the catalyst sample (catalysts 1 to 7) is evaluated by a value of NO conversion (%) = {(inlet NO concentration) - (outlet NO concentration)}/(inlet NO concentration) × 100.

Table 1

| Gas Component | Concentration |
|---|---|
| NO | 350 ppm |
| $NH_3$ | 385 ppm |
| $O_2$ | 15% by volume |
| $H_2O$ | 5% by volume |
| $N_2$ | balance of the above components |

<High-temperature steam durability test>

The durability of the catalysts 1 to 7 produced in Examples and Comparative Examples was evaluated as follows. The prepared catalyst sample (catalysts 1 to 7) was tested in a high-temperature steam durability test with treatment with steam as mentioned below, and then press-formed, ground and sieved to regulate particle size in range of 0.6 to 1.0 mm. The catalyst sample tested according to the high-temperature steam durability test was evaluated for the catalytic activity thereof in the same manner as above.

(Steam treatment)

10% by volume of steam was applied to the catalyst sample at a space velocity SV = 3000/h for 5 hours. The temperature of the steam was 800°C for the catalysts 1, 2 and 4 to 7, and 825°C for the catalyst 3.

The transition metal-loaded zeolite evaluated in the following Examples and Comparative Examples was produced, using zeolite produced in Production Example mentioned hereinunder.

Specifically, the transition metal-loaded zeolite evaluated in Examples 1 and 2 and Comparative Examples 1 and 4 was produced using the zeolite produced in Production Example 1. In Comparative Example 2, by using the zeolite produced in Production Example 3, and in Example 3, by using the zeolite produced in Production Example 2, the transition metal-loaded zeolite was respectively produced, and evaluated.

[Production Example 1]

12.8 g of an aluminum atom raw material, $Al(OH)_3$ ($Al_2O_3$ 53.5 wt%, manufactured by Aldrich Corp.) was added as an aluminum atom raw material to a mixture prepared by mixing 37.0 g of water, 404.2 g of N,N-dimethyl-3,5-dimethylpiperidinium hydroxide (manufactured by SACHEM Corp., aqueous 25 wt% solution) as an organic structure-directing agent (SDA), and 9.7 g of NaOH (manufactured by Wako Pure Chemical Industries) as an alkali metal atom raw material, and dissolved with stirring to prepare a transparent solution.

179.9 g of colloidal silica (silica concentration: 40% by weight, Snowtex 40, manufactured by Nissan Chemical Corporation) was added as a silicon atom raw material to the resultant solution, and stirred at room temperature for 5 minutes, then 3.6 g of a CHA-type zeolite (framework density = 14.5 T/1000 Å$^3$) was added thereto and stirred at room temperature for 2 hours to give a pre-reaction mixture.

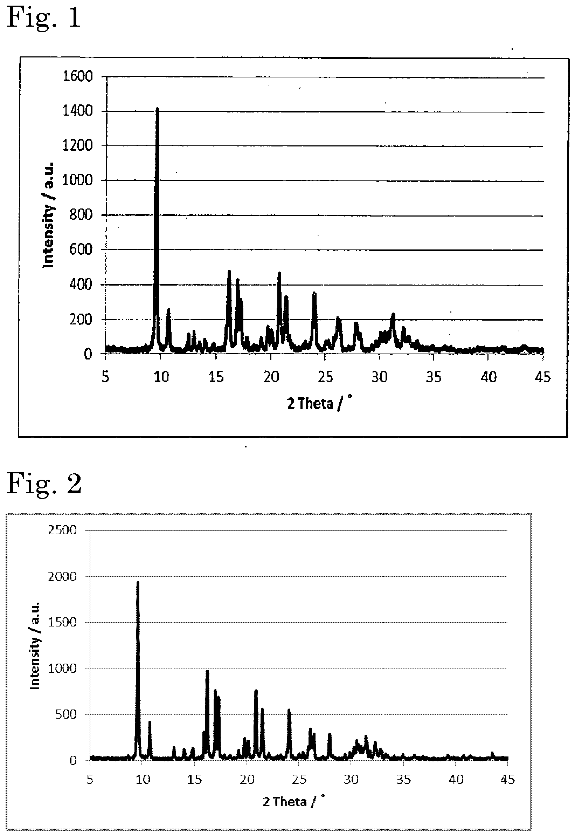

The pre-reaction mixture was charged in a 1000-ml stainless autoclave equipped with a fluororesin inner cylinder, and reacted (for hydrothermal synthesis) therein at 180°C with stirring at 150 rpm for 24 hours. After the hydrothermal synthesis reaction, the reaction liquid was cooled and the formed crystal was collected through filtration. The collected crystal was dried at 100°C for 12 hours, and the resultant zeolite powder was analyzed through XRD, which confirmed synthesis of an AEI-type zeolite 1 that shows an XRD pattern with a peak and a relative intensity at the position shown in Table 2, in terms of lattice spacing. The XRD pattern of the zeolite 1 is shown in Fig. 1. The Si/Al molar ratio determined by XRF analysis was 5.5.

Table 2

| 2 Theta/° | d-spacing (Å) | Relative Intensity [100 × I/I(0)] |
|---|---|---|
| 9.5572 | 9.25 | 100 |
| 10.6936 | 8.27 | 18 |
| 16.1731 | 5.48 | 34 |
| 16.9443 | 5.23 | 30 |
| 17.2487 | 5.14 | 22 |
| 19.7043 | 4.51 | 11 |
| 20.7596 | 4.28 | 33 |
| 21.409 | 4.15 | 24 |
| 23.9864 | 3.71 | 25 |
| 26.1376 | 3.41 | 15 |
| 27.8626 | 3.20 | 13 |
| 31.2924 | 2.86 | 17 |
| 32.2259 | 2.78 | 11 |

[Production Example 2]

9.5 g of Al(OH)$_3$ (Al$_2$O$_3$ 53.5 wt%, manufactured by Aldrich Corp.) was added as an aluminum atom raw material, to a mixture prepared by mixing 132.9 g of water, 180.1 g of N,N-dimethyl-3,5-dimethylpiperidinium hydroxide (manufactured by SACHEM Corp., aqueous 35 wt% solution) as an organic structure-directing agent (SDA), and 26.6 g of NaOH (manufactured by Wako Pure Chemical Industries) as an alkali metal atom raw material, and dissolved with stirring to prepare a transparent solution.

296.7 g of colloidal silica (silica concentration: 40% by weight, Snowtex 40, manufactured by Nissan Chemical Corporation) was added as a silicon atom raw material, to the resultant solution, and stirred at room temperature for 5 minutes, then 6.0 g of a CHA-type zeolite (framework density = 14.5 T/1000 Å$^3$) was added thereto and stirred at room temperature for 2 hours to give a pre-reaction mixture.

The pre-reaction mixture was charged in a 1000-ml stainless autoclave equipped with a fluororesin inner cylinder, and reacted therein at 170°C with stirring at 150 rpm for 48 hours (hydrothermal synthesis). After the hydrothermal synthesis reaction, the reaction liquid was cooled and the formed crystal was collected through filtration. The collected crystal was dried at 100°C for 12 hours, and the resultant zeolite powder was analyzed through XRD, which confirmed formation of an AEI-type zeolite 2 that shows an XRD pattern with a peak and a relative intensity at the position shown in Table 3, in terms of lattice spacing. The XRD pattern of the zeolite 2 is shown in Fig. 2. The Si/Al molar ratio determined by XRF analysis was 8.0.

Table 3

| 2 Theta/° | d-spacing (Å) | Relative Intensity [100 × I/I(0)] |
|---|---|---|
| 9.5977 | 9.21 | 100 |
| 10.7342 | 8.24 | 22 |
| 16.234 | 5.46 | 50 |
| 17.0052 | 5.21 | 39 |
| 17.2893 | 5.13 | 36 |
| 19.7855 | 4.49 | 13 |
| 20.8814 | 4.25 | 39 |
| 21.5105 | 4.13 | 29 |
| 24.1082 | 3.69 | 27 |
| 26.1376 | 3.41 | 18 |
| 27.9438 | 3.19 | 15 |
| 31.4344 | 2.85 | 14 |
| 32.3274 | 2.77 | 10 |

[Production Example 3]

For comparison with the AEI-type zeolite disclosed in WO 2016/080547 A1 (PTL 4), an AEI-type zeolite was synthesized with reference to PTL 4 as follows.

0.72 g of $Al(OH)_3$ ($Al_2O_3$ 53.5 wt%, manufactured by Aldrich Corp.) was added as an aluminum atom raw material, to a mixture prepared by mixing 2.2 g of water, 23.4 g of N,N-dimethyl-3,5-dimethylpiperidinium hydroxide (manufactured by SACHEM Corp., aqueous 20 wt% solution) as an organic structure-directing agent (SDA), and 0.56 g of NaOH (manufactured by Wako Pure Chemical Industries) as an alkali metal atom raw material, and dissolved with stirring to prepare a transparent solution.

10.4 g of colloidal silica (silica concentration: 40% by weight, Snowtex 40, manufactured by Nissan Chemical Corporation) was added as a silicon atom raw material, to the resultant solution, and stirred at room temperature for 5 minutes, then 0.2 g of an uncalcined AEI-type zeolite (framework density = 14.8 T/1000 $Å^3$) was added thereto and stirred at room temperature for 2 hours to give a pre-reaction mixture.

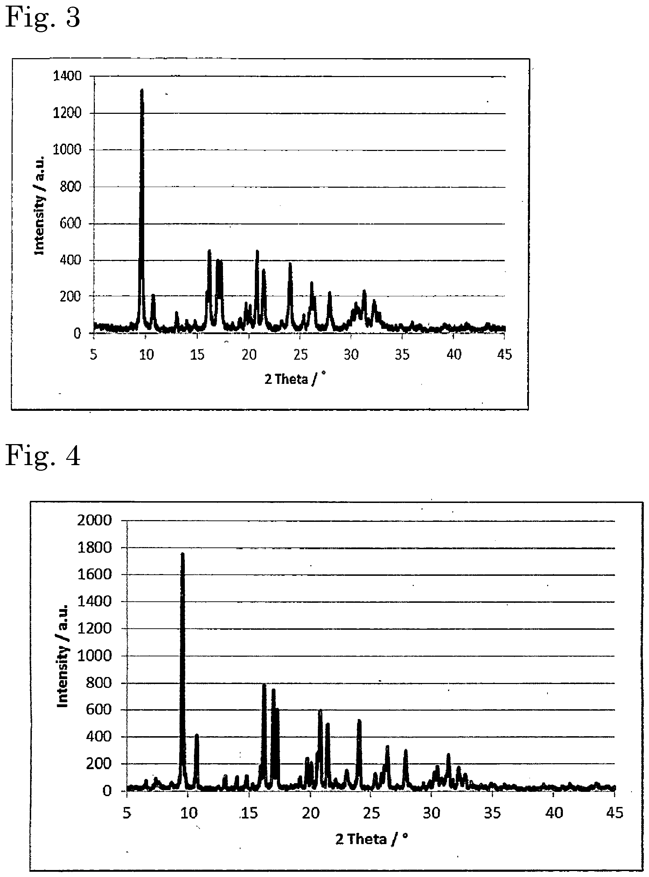

The pre-reaction mixture was charged in a pressure-resistant vessel, and reacted therein for hydrothermal synthesis for 4 days with rotation (15 rpm) in an oven at 170°C. After the hydrothermal synthesis reaction, the reaction liquid was cooled and the formed crystal was collected through filtration. The collected crystal was dried at 100°C for 12 hours, and the resultant zeolite powder was analyzed through XRD, which confirmed synthesis of an AEI-type zeolite 3 that shows an XRD pattern with a peak and a relative intensity at the position shown in Table 4, in terms of lattice spacing. The XRD pattern of the zeolite 3 is shown in Fig. 3. The Si/Al molar ratio determined by in XRF analysis was 6.0.

Table 4

| 2 Theta/° | d-spacing (Å) | Relative Intensity [100 × I/I(0)] |
|---|---|---|
| 9.5572 | 9.25 | 100 |
| 10.6531 | 8.30 | 16 |
| 16.1731 | 5.48 | 34 |
| 16.9849 | 5.22 | 30 |
| 17.269 | 5.13 | 30 |
| 19.7246 | 4.50 | 13 |
| 20.7799 | 4.27 | 34 |
| 21.409 | 4.15 | 26 |

(continued)

| 2 Theta/° | d-spacing (Å) | Relative Intensity [100 × I/I(0)] |
|---|---|---|
| 24.0067 | 3.71 | 29 |
| 26.1173 | 3.41 | 21 |
| 27.8829 | 3.20 | 17 |
| 31.2721 | 2.86 | 17 |
| 32.2259 | 2.78 | 13 |

Example 1

For removing organic substances from zeolite, the zeolite 1 produced in Production Example 1 was calcined in an air flow at 600°C for 6 hours.

Next, for removing Na ions therefrom, the calcined zeolite was dispersed in an aqueous 1 M ammonium nitrate solution and processed therein for ion exchange at 80°C for 2 hours.

Zeolite was collected through filtration, and washed three times with ion-exchanged water. Subsequently, the ion exchange and washing was repeated once more.

The resultant zeolite powder was dried at 100° for 12 hours to give an $NH_4$-type zeolite. XRF analysis confirmed that the Na content contained in the resultant $NH_4$-type zeolite was 1.0% by weight or less in terms of $Na_2O$. The resultant $NH_4$-type zeolite was calcined in an air flow at 500°C for 2 hours to give an H-type zeolite 1A. $NH_3$-TPD confirmed that no $NH_3$ adsorbed to remain on the resultant zeolite 1A.

2.4 g of $Cu(OAc)_2 \cdot H_2O$ (manufactured by Kishida Chemical Co., Ltd.) was dissolved in 77.6 g of water to prepare an aqueous copper(II) acetate solution.

The zeolite 1A was dispersed in the aqueous copper(II) acetate solution and processed for ion exchange at 60°C for 2 hours. Zeolite (zeolite 1B) was collected through filtration, and washed three times with ion-exchanged water.

Subsequently, once again, 2.4 g of $Cu(OAc)_2 \cdot H_2O$ (manufactured by Kishida Chemical Co., Ltd.) was dissolved in 77.6 g of water to prepare an aqueous copper(II) acetate solution, and the zeolite 1B was dispersed therein and processed for ion exchange at 60°C for 2 hours.

Zeolite (zeolite 1C) was collected through filtration, washed three times with ion-exchanged water, and the resultant zeolite powder was dried at 100°C for 12 hours, then calcined in air at 500°C for 2 hours to give a catalyst 1 formed of a Cu-containing AEI-type zeolite. After each ion exchange, the wash filtrate was confirmed to have an electroconductivity of 200 μS/m or less.

In XRF analysis, the Cu content of the catalyst 1 was 3.8% by weight.

Example 2

A catalyst 2 of a Cu-containing AEI-type zeolite was produced according to the same catalyst formation treatment as in Example 1, except that the zeolite 1 after Cu ion exchange was calcined in air at 700°C for 2 hours.

Example 3

For removing organic substances from zeolite, the zeolite 2 produced in Production Example 2 was calcined in an air flow at 600°C for 6 hours.

Next, for removing Na ions therefrom, the calcined zeolite was dispersed in an aqueous 1 M ammonium nitrate solution and processed therein for ion exchange at 80°C for 2 hours.

Zeolite was collected through filtration, and washed three times with ion-exchanged water. Subsequently, the ion exchange and washing was repeated once more.

The resultant zeolite powder was dried at 100° for 12 hours to give an $NH_4$-type zeolite. XRF analysis confirmed that the Na content contained in the resultant $NH_4$-type zeolite was 1.0% by weight or less in terms of $Na_2O$. The resultant $NH_4$-type zeolite was calcined in an air flow at 500°C for 2 hours to give an H-type zeolite 2A. $NH_3$-TPD confirmed that no $NH_3$ adsorbed to remain on the resultant zeolite 2A.

2.4 g of $Cu(OAc)_2 \cdot H_2O$ (manufactured by Kishida Chemical Co., Ltd.) was dissolved in 77.6 g of water to prepare an aqueous copper(II) acetate solution.

The zeolite 2A was dispersed in the aqueous copper(II) acetate solution and processed for ion exchange at 50°C for 2 hours. Zeolite (zeolite 2B) was collected through filtration, and washed three times with ion-exchanged water.

Subsequently, once again, 0.8 g of Cu(OAc)$_2$·H$_2$O (manufactured by Kishida Chemical Co., Ltd.) was dissolved in 79.2 g of water to prepare an aqueous copper(II) acetate solution, and the zeolite 2B was dispersed therein and processed for ion exchange at 40°C for 1 hour.

Zeolite (zeolite 2C) was collected through filtration, washed three times with ion-exchanged water, and the resultant zeolite powder was dried at 100°C for 12 hours, then calcined in air at 600°C for 2 hours to give a catalyst 3 formed of a Cu-containing AEI-type zeolite. After each ion exchange, the wash filtrate was confirmed to have an electroconductivity of 200 μS/m or less.

The Cu content of the catalyst 3 determined by XRF analysis was 3.5% by weight.

[Comparative Example 1]

A catalyst 4 formed of a Cu-containing AEI-type zeolite was produced by carrying out catalyst formation treatment in similar manner to Example 1, except that the zeolite 1 after Cu ion exchange was calcined in air at 900°C for 2 hours. The Cu content of the catalyst 4 determined by XRF analysis was 3.8% by weight.

[Comparative Example 2]

For removing organic substances from zeolite, the zeolite 3 produced in Production Example 3 was calcined in an air flow at 600°C for 6 hours.

Next, for removing Na ions therefrom, the calcined zeolite was dispersed in an aqueous 3 M NH$_4$Cl solution and processed therein for ion exchange at 60°C for 5 hours.

Zeolite was collected through filtration, and washed three times with ion-exchanged water. Subsequently, the ion exchange and washing was repeated twice again.

The resultant zeolite powder was dried at 100°C for 12 hours to give an NH$_4$-type zeolite 3A.

1 g of Cu(OAc)$_2$·H$_2$O (manufactured by Kishida Chemical Co., Ltd.) was dissolved in 37 g of water to prepare an aqueous copper(II) acetate solution.

The zeolite 3A was dispersed in the aqueous copper(II) acetate solution and processed for ion exchange at 40°C for 1.5 hours. Zeolite (zeolite 3B) was collected through filtration, and washed three times with ion-exchanged water.

Subsequently, once again, 1 g of Cu(OAc)$_2$·H$_2$O (manufactured by Kishida Chemical Co., Ltd.) was dissolved in 37 g of water to prepare an aqueous copper(II) acetate solution, and the zeolite 3B was dispersed therein and processed for ion exchange at 80°C for 2 hours.

Zeolite (zeolite 3C) was collected through filtration, washed three times with ion-exchanged water, and the resultant zeolite powder was dried at 100°C for 12 hours, then calcined in air at 450°C for 1 hour to give a catalyst 5 formed of a Cu-containing AEI-type zeolite. The Cu content of the catalyst 5 determined by XRF analysis was 4.1% by weight.

[Comparative Example 3]

With reference to Commun., 2012, 48, 8264-8266, synthesis of an AEI-type zeolite and catalyst formation treatment thereof was carried out as follows.

48.1 g of Y-type zeolite (USY30 CBV720, manufactured by Zeolyst International) was added as an aluminum atom raw material, to a mixture prepared by mixing 430.9 g of water, 116.0 g of N,N-dimethyl-3,5-dimethylpiperidinium hydroxide (manufactured by SACHEM Corp.) as an organic structure-directing agent (SDA), and 16.5 g of NaOH (manufactured by Wako Pure Chemical Industries) as an alkali metal atom raw material, and dissolved with stirring to prepare a transparent solution.

37.9 g of colloidal silica (silica concentration: 40% by weight, Snowtex 40, manufactured by Nissan Chemical Corporation) was added as a silicon atom raw material, to the resultant solution, and stirred at room temperature for 2 hours to give a pre-reaction mixture.

The pre-reaction mixture was charged in a 1000-ml stainless autoclave equipped with a fluororesin inner cylinder, and reacted (for hydrothermal synthesis) therein for 72 hours at 160°C with stirring at 150 rpm. After the hydrothermal synthesis reaction, the reaction liquid was cooled and the formed crystal was collected through filtration. The collected crystal was dried at 100°C for 12 hours, and the resultant zeolite powder was analyzed through XRD, which confirmed synthesis of an AEI-type zeolite 4 that shows an XRD pattern with a peak and a relative intensity at the position shown in Table 5, in terms of lattice spacing. The XRD pattern of the zeolite 4 is shown in Fig. 4. The Si/Al molar ratio determined by XRF analysis was 9.3.

Table 5

| 2 Theta/° | d-spacing (Å) | Relative Intensity [100 × I/I(0)] |
|---|---|---|
| 9.5369 | 9.27 | 100 |
| 10.6936 | 8.27 | 24 |
| 16.1731 | 5.48 | 45 |
| 16.9443 | 5.23 | 43 |
| 17.2487 | 5.14 | 35 |
| 19.7652 | 4.49 | 14 |
| 20.8205 | 4.27 | 34 |
| 21.4293 | 4.15 | 28 |
| 24.0473 | 3.70 | 30 |
| 25.8941 | 3.44 | 8 |
| 27.8829 | 3.20 | 17 |
| 30.5009 | 2.93 | 10 |
| 32.2665 | 2.77 | 10 |

For removing organic substances therefrom, the zeolite was calcined in an air flow at 550°C for 4 hours. 1.8 g of $Cu(OAc)_2 \cdot H_2O$ (manufactured by Kishida Chemical Co., Ltd.) was dissolved in 58.2 g of water to give an aqueous copper(II) acetate solution.

The zeolite 4A was dispersed in the aqueous copper(II) acetate solution, and processed for ion exchange at 60°C for 2 hours. Zeolite (zeolite 4B) was collected through filtration, and washed three times with ion-exchanged water. The ion-exchange and washing was repeated twice more, and the resultant zeolite powder was dried at 100° for 12 hours, and then calcined in air at 450°C for 4 hours to give a catalyst 6 formed of a Cu-containing AEI-type zeolite.

The Cu content of the catalyst 6 determined by XRF analysis was 4.4% by weight.

[Comparative Example 4]

A catalyst 7 formed of a Cu-containing AEI-type zeolite was produced by carrying out catalyst formation treatment in similar manner to Example 1, except that the Cu ion exchange was carried out without changing the zeolite 1 in Example 1 from an $NH_4$-type to an H-type. The Cu content of the catalyst 7 determined by XRF analysis was 3.6% by weight.

Durability evaluation results of the catalysts 1 to 7 of Examples and Comparative Examples are shown in Table 6 and Table 7.

With respect to the absorption intensity ratio based on UV-Vis-NIR and the maximum peak intensity ratio based on $NH_3$-TPD, the catalysts 1 to 3 all had the values falling within the desired ranges, respectively. In the catalysts, obviously, the transition metal, copper did not form a copper oxide dimer but was loaded on the AEI-type zeolite as a cation thereof.

Of the catalysts 4 to 7, the absorption intensity ratio based on UV-Vis-NIR was more than 0.4, which shows that the proportion of copper oxide dimer in the loaded copper is extremely large.

It has become apparent that when copper, which is a transition metal, is loaded without forming a copper oxide dimer as much as possible, a SCR catalyst having an extremely high-level hydrothermal durability can be provided.

Table 6

| Catalyst No. | Characteristics of Metal-Loaded Zeolite | | | | | | | |
|---|---|---|---|---|---|---|---|---|
| | IZA | Metal M | M Content (wt%) | M/Al | Si/Al | UV-Vis-NIR | $NH_3$-TPD | Peak Temperature |
| 1 | AEI | copper | 3.8 | 0.23 | 5.5 | 0.17 | 1.12 | 360°C/526°C |
| 2 | AEI | copper | 3.8 | 0.23 | 5.5 | 0.13 | 1.40 | 355°C/500°C |
| 3 | AEI | copper | 3.5 | 0.30 | 8.0 | 0.13 | 1.04 | 361°C/531°C |

(continued)

| Catalyst No. | Characteristics of Metal-Loaded Zeolite | | | | | | | |
|---|---|---|---|---|---|---|---|---|
| | IZA | Metal M | M Content (wt%) | M/Al | Si/Al | UV-Vis-NIR | NH$_3$-TPD | Peak Temperature |
| 4 | AEI | copper | 3.8 | 0.23 | 5.5 | 0.63 | 2.28 | 302°C/451°C |
| 5 | AEI | copper | 4.1 | 0.29 | 6.0 | 0.49 | 1.28 | 350°C/520°C |
| 6 | AEI | copper | 4.4 | 0.39 | 9.3 | 0.67 | 1.24 | 352°C/525°C |
| 7 | AEI | copper | 3.6 | 0.22 | 5.5 | 0.42 | 1.19 | 343°C/532°C |

Table 7

| | Catalyst | | NO Conversion (%) | | | | | |
|---|---|---|---|---|---|---|---|---|
| | | | 175°C | 200°C | 250°C | 300°C | 400°C | 500°C |
| Example 1 | Catalyst 1 | before durability test | 77 | 93 | 100 | 100 | 100 | 100 |
| | | after durability test | 54 | 79 | 96 | 99 | 94 | 85 |
| Example 2 | Catalyst 2 | before durability test | 78 | 94 | 100 | 100 | 100 | 98 |
| | | after durability test | 54 | 80 | 98 | 99 | 97 | 87 |
| Example 3 | Catalyst 3 | before durability test | 63 | 90 | 99 | 100 | 96 | 81 |
| | | after durability test | 60 | 85 | 99 | 100 | 95 | 79 |
| Comparative Example 1 | Catalyst 4 | before durability test | 62 | 85 | 99 | 100 | 99 | 92 |
| | | after durability test | 36 | 56 | 84 | 92 | 88 | 76 |
| Comparative Example 2 | Catalyst 5 | before durability test | 75 | 96 | 100 | 100 | 100 | 97 |
| | | after durability test | 49 | 71 | 96 | 98 | 87 | 51 |
| Comparative Example 3 | Catalyst 6 | before durability test | 58 | 86 | 99 | 100 | 96 | 74 |
| | | after durability test | 33 | 54 | 87 | 92 | 89 | 67 |
| Comparative Example 4 | Catalyst 7 | before durability test | 72 | 90 | 100 | 100 | 100 | 100 |
| | | after durability test | 45 | 69 | 93 | 95 | 92 | 87 |

Regarding the nitrogen oxide purifying catalysts of the present invention, it is known that the catalytic activity (NO conversion (%)) thereof reduced only a little after the durability test and therefore the catalysts keep excellent performance. Above all, it is known that the activity reduction of the catalyst 3 in a low-temperature range (200°C) is small as compared with that of the other catalysts of the present invention, and therefore the catalyst is excellent in durability.

Industrial Applicability

According to the present invention, there can be provided a catalyst having a high activity in a low-temperature region (especially 200°C or lower) that is said to be important for selective reduction catalysts for exhaust gas containing nitrogen oxides, and capable of suppressing activity reduction.

In addition, the catalyst can be favorably used for purifying nitrogen oxides in exhaust gas by bringing it into contact with nitrogen oxides-containing exhaust gas.

**Claims**

1. A transition metal-loaded zeolite,

comprising zeolite having a structure designated as AEI according to a code system defined by International Zeolite Association (IZA), wherein the zeolite is an aluminosilicate zeolite containing at least a silicon atom and an aluminum atom in the framework structure thereof and the Si/Al ratio of the zeolite is 10 or less, and a transition metal M loaded thereon, wherein the transition metal M is copper and the amount of the copper is 2.0 parts by weight or more and 10 parts by weight or less relative to 100 parts by weight of the zeolite; and satisfying the following (1) and (2):

(1) a ratio of absorption intensity based on ultraviolet-visible-near infrared spectroscopy (UV-Vis-NIR), which is obtained according to the following expression (I), is less than 0.4;

$$\text{Intensity } (32,500 \text{ cm}^{-1})/\text{Intensity } (12,500 \text{ cm}^{-1}) \qquad (I)$$

(2) a peak intensity obtained according to ammonia temperature-programmed desorption ($NH_3$-TPD) exists in at least each of a range of 200°C to 400°C and a range of 450°C to 600°C and the ratio of the maximum peak intensity in the range of 200°C to 400°C to the maximum peak intensity in the range of 450°C to 600°C ($NH_3$-$TPD_{200\sim400}$/$NH_3$-$TPD_{450\sim600}$) is 1.0 or more and 2.0 or less.

2. The transition metal-loaded zeolite according to claim 1, further satisfying the following (3):
(3) the molar ratio M/Al is 0.1 or more and 0.35 or less.

3. The transition metal-loaded zeolite according to claim 1 or 2, wherein the ratio of absorption intensity based on ultraviolet-visible-near infrared spectroscopy (UV-Vis-NIR) is less than 0.3.

4. The transition metal-loaded zeolite according to claim 1 or 2, wherein the ratio of absorption intensity based on ultraviolet-visible-near infrared spectroscopy (UV-Vis-NIR) is less than 0.2.

5. The transition metal-loaded zeolite according to any one of claims 1 to 4, wherein the temperature at the maximum peak intensity of the transition metal-loaded zeolite, as obtained according to the ammonia temperature-programmed desorption ($NH_3$-TPD), falls within a range of 250°C to 400°C.

6. A nitrogen oxide purifying catalyst for purifying nitrogen oxides, comprising a transition metal-loaded zeolite of any one of claims 1 to 5.

7. A method of using a transition metal-loaded zeolite as a catalyst for purifying nitrogen oxides, wherein the transition metal-loaded zeolite comprising; zeolite having a structure designated as AEI according to a code system defined by International Zeolite Association (IZA), and containing at least a silicon atom and an aluminum atom in the framework structure thereof, and a transition metal M loaded thereon, wherein the transition metal M is copper; and satisfying the following (1) and (2):

(1) a ratio of absorption intensity based on ultraviolet-visible-near infrared spectroscopy (UV-Vis-NIR), which is obtained according to the following expression (I), is less than 0.4;

$$\text{Intensity } (32,500 \text{ cm}^{-1})/\text{Intensity } (12,500 \text{ cm}^{-1}) \qquad (I)$$

(2) a peak intensity obtained according to ammonia temperature-programmed desorption ($NH_3$-TPD) exists in at least each of a range of 200°C to 400°C and a range of 450°C to 600°C, and the ratio of the maximum peak intensity in the range of 200°C to 400°C to the maximum peak intensity in the range of 450°C to 600°C ($NH_3$-$TPD_{200\sim400}$/$NH_3$-$TPD_{450\sim600}$) is 1.0 or more and 2.0 or less.

8. The method of using a transition metal-loaded zeolite according to claim 7, wherein the transition metal-loaded zeolite further satisfies the following (3):
(3) the molar ratio M/Al is 0.1 or more and 0.35 or less.

9. The method of using a transition metal-loaded zeolite as a catalyst for purifying nitrogen oxides according to claim 7 or 8, wherein the ratio of absorption intensity based on ultraviolet-visible-near infrared spectroscopy (UV-Vis-NIR) is less than 0.3.

**10.** The method of using a transition metal-loaded zeolite as a catalyst for purifying nitrogen oxides according to claim 7 or 8, wherein the ratio of absorption intensity based on ultraviolet-visible-near infrared spectroscopy (UV-Vis-NIR) is less than 0.2.

**11.** The method of using a transition metal-loaded zeolite as a catalyst for purifying nitrogen oxides according to any one of claims 7 to 10, wherein the temperature at the maximum peak intensity of the transition metal-loaded zeolite, as obtained according to ammonia temperature-programmed desorption (NH$_3$-TPD), falls within a range of 250°C to 400°C.

**12.** A method for producing a transition metal-loaded zeolite according to any one of claims 1 to 5, comprising: bringing an H-type of AEI-type zeolite into contact with a transition metal compound-containing liquid to cause the transition metal compound to be loaded on the zeolite, and then calcinating the resultant at a temperature of 500°C or higher and 850°C or lower to produce a transition metal-loaded zeolite, wherein

the zeolite is an aluminosilicate zeolite,
the transition metal is copper,
the Si/Al ratio of the zeolite is 10 or less, and
the amount of the copper in the transition metal-loaded zeolite is 2.0 parts by weight or more and 10 parts by weight or less relative to 100 parts by weight of the zeolite.

**Patentansprüche**

**1.** Übergangsmetallbeladenes Zeolith,

umfassend Zeolith mit einer gemäß einem durch die Internationale Zeolithvereinigung (IZA) definierten Codierungssystem als AEI bezeichnete Struktur, wobei das Zeolith ein Aluminosilikat-Zeolith ist, das mindestens ein Siliciumatom und ein Aluminiumatom in seiner Gerüststruktur enthält und das Si/Al-Verhältnis des Zeoliths 10 oder weniger beträgt, und ein darauf geladenes Übergangsmetall M, wobei das Übergangsmetall M Kupfer ist und die Menge des Kupfers 2,0 Gewichtsteile oder mehr und 10 Gewichtsteile oder weniger, bezogen auf 100 Gewichtsteile des Zeoliths, beträgt, und
die folgenden (1) und (2) erfüllend:

(1) ein Absorptionsintensitätsverhältnis, basierend auf Ultraviolett-Sichtbar-Nahinfrarot-Spektroskopie (UV-Vis-NIR), das gemäß dem folgenden Ausdruck (I) erhalten wird, beträgt weniger als 0,4,

$$\text{Intensität } (32.500 \text{ cm}^{-1})/\text{Intensität } (12.500 \text{ cm}^{-1}) \qquad \text{(I)}$$

(2) eine Peakintensität, die gemäß einer temperaturprogrammierten Desorption von Ammoniak (NH$_3$-TPD) erhalten wird, ist in mindestens jedem von einem Bereich von 200°C bis 400°C und einem Bereich von 450°C bis 600°C vorhanden und das Verhältnis der maximalen Peakintensität im Bereich von 200°C bis 400°C zur maximalen Peakintensität im Bereich von 450°C bis 600°C (NH$_3$-TPD$_{200-400}$/NH$_3$-TPD$_{450-600}$) beträgt 1,0 oder mehr und 2,0 oder weniger.

**2.** Übergangsmetallbeladenes Zeolith gemäß Anspruch 1, das ferner das folgende (3) erfüllt:
(3) das M/Al-Molverhältnis beträgt 0,1 oder mehr und 0,35 oder weniger.

**3.** Übergangsmetallbeladenes Zeolith gemäß Anspruch 1 oder 2, wobei das Absorptionsintensitätsverhältnis, basierend auf Ultraviolett-Sichtbar-Nahinfrarot-Spektroskopie (UV-Vis-NIR), weniger als 0,3 beträgt.

**4.** Übergangsmetallbeladenes Zeolith gemäß Anspruch 1 oder 2, wobei das Absorptionsintensitätsverhältnis, basierend auf Ultraviolett-Sichtbar-Nahinfrarot-Spektroskopie (UV-Vis-NIR), weniger als 0,2 beträgt.

**5.** Übergangsmetallbeladenes Zeolith gemäß einem der Ansprüche 1 bis 4, wobei die Temperatur bei der maximalen Peakintensität des übergangsmetallbeladenen Zeoliths, erhalten gemäß der temperaturprogrammierten Desorption von Ammoniak (NH$_3$-TPD), in einen Bereich von 250°C bis 400°C fällt.

**6.** Stickoxid-Reinigungskatalysator zum Reinigen von Stickoxiden, umfassend ein übergangsmetallbeladenes Zeolith gemäß einem der Ansprüche 1 bis 5.

**7.** Verfahren zur Verwendung eines übergangsmetallbeladenen Zeoliths als Katalysator zum Reinigen von Stickoxiden, wobei das übergangsmetallbeladene Zeolith umfasst:

Zeolith, das eine gemäß einem durch die Internationale Zeolithvereinigung (IZA) definierten Codierungssystem als AEI bezeichnete Struktur aufweist und mindestens ein Siliciumatom und ein Aluminiumatom in seiner Gerüststruktur enthält, und ein darauf beladenes Übergangsmetall M, wobei das Übergangsmetall M Kupfer ist, und die folgenden (1) und (2) erfüllt:

(1) ein Absorptionsintensitätsverhältnis, basierend auf Ultraviolett-Sichtbar-Nahinfrarot-Spektroskopie (UV-Vis-NIR), das gemäß dem folgenden Ausdruck (I) erhalten wird, beträgt weniger als 0,4,

$$\text{Intensität } (32.500 \text{ cm}^{-1})/\text{Intensität } (12.500 \text{ cm}^{-1}) \qquad (I)$$

(2) eine Peakintensität, die gemäß einer temperaturprogrammierten Desorption von Ammoniak ($NH_3$-TPD) erhalten wird, in mindestens jedem von einem Bereich von 200°C bis 400°C und einem Bereich von 450°C bis 600°C vorhanden ist und das Verhältnis der maximalen Peakintensität im Bereich von 200°C bis 400°C zur maximalen Peakintensität im Bereich von 450°C bis 600°C ($NH_3$-$TPD_{200-400}$/$NH_3$-$TPD_{450-600}$) beträgt 1,0 oder mehr und 2,0 oder weniger.

**8.** Verfahren zur Verwendung eines übergangsmetallbeladenen Zeoliths gemäß Anspruch 7, wobei das übergangsmetallbeladene Zeolith ferner das folgende (3) erfüllt:
(3) das M/Al-Molverhältnis beträgt 0,1 oder mehr und 0,35 oder weniger.

**9.** Verfahren zur Verwendung eines übergangsmetallbeladenen Zeoliths als Katalysator zur Reinigung von Stickoxiden gemäß Anspruch 7 oder 8, wobei das Absorptionsverhältnis, basierend auf Ultraviolett-Sichtbar-Nahinfrarot-Spektroskopie (UV-Vis-NIR), weniger als 0,3 beträgt.

**10.** Verfahren zur Verwendung eines übergangsmetallbeladenen Zeoliths als Katalysator zur Reinigung von Stickoxiden gemäß Anspruch 7 oder 8, wobei das Absorptionsverhältnis, basierend auf Ultraviolett-Sichtbar-Nahinfrarot-Spektroskopie (UV-Vis-NIR), weniger als 0,2 beträgt.

**11.** Verfahren zur Verwendung eines übergangsmetallbeladenen Zeoliths als Katalysator zur Reinigung von Stickoxiden gemäß einem der Ansprüche 7 bis 10, wobei die Temperatur bei der maximalen Peakintensität des übergangsmetallbeladenen Zeoliths, erhalten gemäß der temperaturprogrammierten Desorption von Ammoniak ($NH_3$-TPD), in einen Bereich von 250°C bis 400°C fällt.

**12.** Verfahren zur Herstellung eines übergangsmetallbeladenen Zeoliths gemäß einem der Ansprüche 1 bis 5, umfassend:

Inkontaktbringen eines AEI-Zeolithtyps vom H-Typ mit einer Übergangsmetallverbindung-haltigen Flüssigkeit, um die Übergangsmetallverbindung dazu zu bringen, das Zeolith zu beladen, und dann Kalzinieren des Resultierenden bei einer Temperatur von 500°C oder höher und 850°C oder niedriger zur Herstellung eines übergangsmetallbeladenen Zeoliths, wobei
das Zeolith ein Aluminosilikat-Zeolith ist,
das Übergangsmetall Kupfer ist,
das Si/Al-Verhältnis des Zeoliths 10 oder weniger beträgt und
die Menge des Kupfers in dem übergangsmetallbeladenen Zeolith 2,0 Gewichtsteile oder mehr oder 10 Gewichtsteile oder weniger, bezogen auf 10 Gewichtsteile des Zeoliths, beträgt.

**Revendications**

**1.** Zéolite chargée en métal de transition,

comprenant une zéolite ayant une structure désignée par AEI selon un système de code défini par l'International Zeolite Association (IZA), dans laquelle la zéolite est une zéolite d'aluminosilicate contenant au moins un atome de silicium et un atome d'aluminium dans la structure de base d'elle-même et le rapport Si/Al de la zéolite est de 10 ou moins, et un métal de transition M chargé sur elle, dans laquelle le métal de transition M est le cuivre et la quantité de cuivre est de 2,0 parties en poids ou plus et de 10 parties en poids ou moins par rapport à 100 parties en poids de la zéolite ; et
satisfaisant les (1) et (2) suivants :

(1) un rapport d'intensité d'absorption basé sur la spectroscopie ultraviolet-visible-proche infrarouge (UV-Vis-NIR), qui est obtenu selon l'expression (I) suivante, est inférieur à 0,4 ;

$$\text{Intensité } (32\ 500\ \text{cm}^{-1})/\text{Intensité } (12\ 500\ \text{cm}^{-1}) \qquad (I)$$

(2) une intensité de crête obtenue selon une désorption programmée en température de l'ammoniac (NH$_3$-TPD) existe dans au moins chaque plage parmi une plage de 200°C à 400 °C et une plage de 450 °C à 600 °C et le rapport intensité de crête maximale dans la plage de 200 °C à 400 °C sur intensité de crête maximale dans la plage de 450 °C à 600 °C (NH$_3$-TPD$_{200\sim400}$/NH$_3$-TPD$_{450\sim600}$) est de 1,0 ou plus et de 2,0 ou moins.

2. Zéolite chargée en métal de transition selon la revendication 1, satisfaisant en outre le (3) suivant :
(3) le rapport molaire M/Al est de 0,1 ou plus et de 0,35 ou moins.

3. Zéolite chargée en métal de transition selon la revendication 1 ou la revendication 2, dans laquelle le rapport d'intensité d'absorption basé sur la spectroscopie ultraviolet-visible-proche infrarouge (UV-Vis-NIR) est inférieur à 0,3.

4. Zéolite chargée en métal de transition selon la revendication 1 ou la revendication 2, dans laquelle le rapport d'intensité d'absorption basé sur la spectroscopie ultraviolet-visible-proche infrarouge (UV-Vis-NIR) est inférieur à 0,2.

5. Zéolite chargée en métal de transition selon l'une quelconque des revendications 1 à 4, dans laquelle la température à l'intensité de crête maximale de la zéolite chargée en métal de transition, telle qu'obtenue selon la désorption programmée en température de l'ammoniac (NH$_3$-TPD), se situe dans une plage de 250 °C à 400 °C.

6. Catalyseur de purification d'oxydes d'azote pour purifier les oxydes d'azote, comprenant une zéolite chargée en métal de transition selon l'une quelconque des revendications 1 à 5.

7. Procédé d'utilisation d'une zéolite chargée en métal de transition en tant que catalyseur pour purifier les oxydes d'azote, dans lequel la zéolite chargée en métal de transition comprend ; une zéolite ayant une structure désignée par AEI selon un système de code défini par l'International Zeolite Association (IZA), et contenant au moins un atome de silicium et un atome d'aluminium dans la structure de base d'elle-même, et un métal de transition M chargé sur elle, le métal de transition M étant le cuivre ;
et satisfaisant les (1) et (2) suivants :

(1) un rapport d'intensité d'absorption basé sur la spectroscopie ultraviolet-visible-proche infrarouge (UV-Vis-NIR), qui est obtenu selon l'expression (I) suivante, est inférieur à 0,4 ;

$$\text{Intensité } (32\ 500\ \text{cm}^{-1}/\text{Intensité } (12\ 500\ \text{cm}^{-1}) \qquad (I)$$

(2) une intensité de crête obtenue selon une désorption programmée en température de l'ammoniac (NH$_3$-TPD) existe dans au moins chaque plage parmi une plage de 200°C à 400 °C et une plage de 450 °C à 600 °C et le rapport intensité de crête maximale dans la plage de 200 °C à 400 °C sur intensité de crête maximale dans la plage de 450 °C à 600 °C (NH$_3$-TPD$_{200\sim400}$/NH$_3$-TPD$_{450\sim600}$) est de 1,0 ou plus et de 2,0 ou moins.

8. Procédé d'utilisation d'une zéolite chargée en métal de transition selon la revendication 7, dans lequel la zéolite chargée en métal de transition satisfait en outre le (3) suivant :

(3) le rapport molaire M/Al est de 0,1 ou plus et de 0,35 ou moins.

9. Procédé d'utilisation d'une zéolite chargée en métal de transition en tant que catalyseur pour purifier les oxydes d'azote selon la revendication 7 ou la revendication 8, dans lequel le rapport d'intensité d'absorption basé sur la spectroscopie ultraviolet-visible-proche infrarouge (UV-Vis-NIR) est inférieur à 0,3.

10. Procédé d'utilisation d'une zéolite chargée en métal de transition en tant que catalyseur pour purifier les oxydes d'azote selon la revendication 7 ou la revendication 8, dans lequel le rapport d'intensité d'absorption basé sur la spectroscopie ultraviolet-visible-proche infrarouge (UV-Vis-NIR) est inférieur à 0,2.

11. Procédé d'utilisation d'une zéolite chargée en métal de transition en tant que catalyseur de purification des oxydes d'azote selon l'une quelconque des revendications 7 à 10, dans lequel la température à l'intensité de crête maximale de la zéolite chargée en métal de transition, telle qu'obtenue selon la désorption programmée en température de l'ammoniac ($NH_3$-TPD), se situe dans une plage de 250 °C à 400 °C.

12. Procédé de production d'une zéolite chargée en métal de transition selon l'une quelconque des revendications 1 à 5, comprenant : la mise en contact d'un type H de zéolite de type AEI avec un liquide contenant un composé de métal de transition pour amener le composé de métal de transition à se charger sur la zéolite, et ensuite la calcination de ce qui obtenu à une température de 500 °C ou plus et de 850 °C ou moins pour produire une zéolite chargée en métal de transition, dans lequel

la zéolite est une zéolite d'aluminosilicate,
le métal de transition est le cuivre,
le rapport Si/Al de la zéolite est de 10 ou moins, et
la quantité de cuivre dans la zéolite chargée en métal de transition est de 2,0 parties en poids ou plus et de 10 parties en poids ou moins par rapport à 100 parties en poids de la zéolite.

Fig. 1

Fig. 2

# Fig. 3

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5958370 A
- WO 2013159825 A1
- WO 2016080547 A1
- US 2013272937 A1
- US 2014271426 A

### Non-patent literature cited in the description

- *Dalton Transactions,* 2013, vol. 42, 12741-12761
- *J. Am. Chem. Soc.,* 2003, vol. 125, 7629-7640
- *American Chemical Society Catalysis,* 2015, vol. 5, 6209-6218
- **RADKA NEDYALKOVA et al.** Interzeolite Conversion of FAU Type Zeolite into CHA and its Application in NH3-SCR. *TOPICS IN CATALYSIS,* 2013, vol. 56 (9-10
- **TAKUSHI SONODA et al.** Synthesis of high-silica AEI zeolites with enhanced thermal stability by hydrothermal conversion of FAU zeolites, and their activity in the selective catalytic reduction of NOx with NH3. *JOURNAL OF MATERIALS CHEMISTRY A,* 2015, vol. 3 (2
- **YONGHENG LI et al.** Nature of Cu Species in Cu-SAPO-18 Catalyst for NH3-SCR: Combination of Experiments and DFT Calculations. *JOURNAL OF PHYSICAL CHEMISTRY C,* 2016, vol. 120 (27
- **JONATAN D. ALBARRACIN-CABALLERO et al.** Structural and kinetic changes to small-pore Cu-zeolites after hydrothermal aging treatments and selective catalytic reduction of NO x with ammonia. *REACTION CHEMISTRY & ENGINEERING,* 2017, vol. 2 (2
- **CH. BAERLOCHER et al.** ATLAS OF ZEOLITE FRAME WORK TYPES. ELSEVIER, 2007
- *Commun.,* 2012, vol. 48, 8264-8266